# EUROPÄISCHE PATENTSCHRIFT

(11) **EP 1 313 783 B1**
(45) Veröffentlichungstag und Bekanntmachung des Hinweises auf die Patenterteilung: **11.04.2007**
(21) Anmeldenummer: 01969475.1
(22) Anmeldetag: 23.07.2001
(51) Int. Cl.: C08G 18/08, C08G 18/48, C08J 7/04, B05D 7/00

(54) **MEHRSCHICHTIGE BESCHICHTUNGSSYSTEME AUS EINER DICKSCHICHTIGEN, GELARTIGEN GRUNDSCHICHT UND EINER DECKSCHICHT AUS POLYURETHAN-LACK, DEREN HERSTELLUNG UND VERWENDUNG**
MULTI-LAYERED COATING SYSTEMS CONSISTING OF A THICK, GEL-TYPE BASE COAT AND A TOP COAT OF POLYURETHANE LACQUER, PRODUCTION AND USE THEREOF
SYSTEMES DE REVETEMENTS MULTICOUCHES, CONSTITUES D'UNE COUCHE DE BASE EPAISSE, DE TYPE GEL, ET D'UNE COUCHE DE PROTECTION EN VERNIS DE POLYURETHANNE, LEUR PRODUCTION, AINSI QUE LEUR UTILISATION

(30) Priorität: 31.07.2000 DE 10037157
(43) Veröffentlichungstag der Anmeldung: 28.05.2003
(73) Patentinhaber: Bayer MaterialScience AG, 51368 Leverkusen (DE); TechnoGel GmbH & Co. KG, 37115 Duderstadt (DE)
(72) Erfinder: STENDER, Adolf, 37115 Duderstadt (DE); KOBUSCH, Claus, Shanghai 200021 (CN); KÜTTNER, Wolfram, 51467 Bergisch Gladbach (DE)
(86) Internationale Anmeldenummer: PCT/EP2001/008479
(87) Internationale Veröffentlichungsnummer: WO 2002/010241

(56) Entgegenhaltungen:
- EP-A- 0 057 838
- EP-A- 0 511 570

## Beschreibung

Die Erfindung betrifft ein mehrschichtiges Beschichtungssystem aus einer dickschichtigen, gelartigen Grundschicht und einer Deckschicht aus Polyurethan-Lack, deren Herstellung und Verwendung (Applikation).

In der Automobilindustrie ist heutzutage als Standard für z.B. die Instrumententafel
- ein unbeschichteten Kunststoff zu verwenden (Billig-Lösung mit schlechter Optik und Haptik und schlechten Beständigkeiten gegen Umwelteinflüsse),
- einen Systemaufbau bestehend aus Polyurethanschaum und Folie, Textil oder Leder als Dekorschicht mittels Klebkaschierung zu applizieren (gute Haptik, aber hohe Kosten durch komplizierte Herstellung),
- die eingesetzten Kunststoffe nachträglich zu lackieren, z.B. mit einem 2K-Polyurethan basierenden 50µm dünnen Softfeel Lack (mittlere Haptik, gute Beständigkeiten, mittlerer Preis).

Dies gilt im übertragenen Sinne auch für die anderen Einsatzgebiete von Kunststoffen, die im direkten Kontakt mit der menschlichen Haut stehen. Der Softeffekt der dünnen Softfeel-Lackschichten lässt sich nur in Grenzen vergrößern (z.B. durch Erhöhung der Schichtstärke auf 100µm), wobei die Beständigkeiten und die Optik des Lackfilms meistens schlechter werden.

Auch der Systemaufbau Träger/Schaum/Folie hat etliche Nachteile:
- Der Herstellaufwand ist hoch, daher sind diese Systeme teuer.
- Die Lichtechtheit ist häufig nicht gegeben.
- Durch den Einsatz von Weichmachern in den Folien wird ein erheblicher Beitrag zum Fogging geleistet.

Wasserfreie Gelmassen wie sie z.B. in der EP-A 0 057 838 und EP-A 0 057 839 beschrieben sind, sind mittlerweile im Markt weit verbreitet und werden nach den in diesen Veröffentlichungen beschriebenen Verfahren hergestellt und eingesetzt. Diese Anmeldungen betreffen wasserfreie Gelmassen, gegebenenfalls wirkstoffhaltige Gelmassen mit Depotwirkung, bestehend aus einer Polyurethanmatrix und höhermolekularen Polyolen als Dispersionsmittel und gegebenenfalls Wirkstoffen, sowie ein Verfahren zur Herstellung der Gelmassen, gegebenenfalls in Anwesenheit der Wirkstoffe. Als Wirkstoffe können Biozide, Pharmazeutika, etherische Öle, Duftstoffe, Farben, Reinigungsmittel, Alterungsschutzmittel, Gleit- und Antistatikmittel und andere eingesetzt werden. Die Gelmassen können als Abform oder Eingussmassen oder als wirkstoffhaltige Formteile mit Depotwirkung der Wirkstoffe Verwendung finden. Allerdings werden diese Gele als solche eingesetzt und mit z.B. Folien oder Textil kaschiert, um einen Einsatz als Block-Gel zu ermöglichen.

Gele auf wässriger Basis werden seit Jahren in vielen technischen Bereichen verwendet (s. z.B. R.L. Whistler, Industrial Gums, Academic Press, InC., New York, 1973 und DE-A 2 347 299). Eine besonders interessante Eigenschaft der Gele besteht darin, dass sie eine hohe Abformgenauigkeit aufweisen. Dies wird dazu genutzt, um Formkörper zu doublieren. Dabei wird der abzuformende Körper mit der gelbildenden Masse umgossen. Nach der Gelbildung wird der Formkörper entnommen. Man erhält eine Gelform, deren Hohlraum dem Volumen des Formkörpers entspricht. Als Doubliermasse wird z.B. im Dentalbereich ein Agar-Agar-Gel verwendet. Solche Massen weisen jedoch eine Reihe von Nachteilen auf:
a) Die Gelierung dauert lange und muss unter bestimmten Verfahrensbedingungen erfolgen,
b) die Elastizität des Gels ist für die Entformung von dünnen Stegen und Hinterschnitten nicht hoch genug und
c) die Dimensionsstabilität ist nicht befriedigend,
d) bei offener Lagerung der Gelform tritt bereits nach sehr kurzer Zeit infolge der Wasserverdunstung eine Veränderung der Proportionen ein.

Weiterhin sind wasserfreie Abformmassen, z.B. auf Silikonbasis, bekannt. Sie werden hergestellt, indem man ein Vorpolymerisat mit einer geringen Menge an Vernetzungsmittel vermischt. Das abzuformende Modell wird mit dieser Reaktionsmischung umgossen und nach der Aushärtung der Mischung entnommen. Man erhält eine Form mit einem Hohlraum, in der dann Abgüsse des Modells hergestellt werden können. Wasserfreie Abformmassen besitzen jedoch folgende Nachteile:
a) zu hohe Viskosität für die Abformung sehr feiner Vertiefungen und Hinterschnitte in der Oberfläche des Modells und
b) zu lange Reaktionszeiten; bei der Verkürzung der Reaktionszeit durch Erhöhung des Vernetzungsmittelanteils erfolgt eine zu starke Schrumpfung der Form.

Wirkstoffe enthaltende Gelmassen mit Depotwirkung, bei denen die Wirkstoffe über einen Zeitraum von Wochen bis Monaten an das umgebende Medium abgegeben werden, sind beispielsweise aus den US-A 3 822 238 und 3 975 350 bekannt. Weiterhin ist es aus der DE-A 25 21 265 bekannt, wasser- und/oder alkoholhaltige Polyurethan-Polyharnstoffgele in Gegenwart von Duftstoffen herzustellen. Hierbei werden Trägermaterialien auf Basis Wasser enthaltender Gele beschrieben, die die vielfältigsten Agentien enthalten können, z.B. Pharmazeutika, Biozide oder Duftstoffe. Derartige Wassergele haben jedoch den Nachteil, dass viele Agentien, z.B. Biozide, durch die Anwesenheit des Wassers relativ schnell zersetzt werden können und somit die Zeit der Wirksamkeit dieser Gele, d.h. der Depoteffekt, stark verkürzt wird. Weiterhin ist bekannt, Wirkstoffe massiven und/oder geschäumten hochmolekularen Polyurethanen zu inkorporieren (CH-A 289 915).

Derartige hochmolekulare Polyurethane haben jedoch den Nachteil, dass ein hoher Anteil der inkorporierten flüssigen Agentien in Folge des durchgängig hochmolekularen Aufbaus und/oder zu hohem Hartsegmentanteil im Polyurethan verbleibt und damit für die Depotwirkung verloren ist. Feste aktive Agentien können nur sehr begrenzt eingesetzt werden; nicht-flüchtige Festsubstanzen wandern nicht heraus und leichflüchtige feste Agentien können nur für sehr kurze Zeit und in sehr geringer Menge herausdiffundieren.

In der EP-A 0 057 838 und EP-A 57 839 wurden Gele auf Basis von Polyolen beschrieben, die eine hohe Abformgenauigkeit aufweisen, ohne mit den genannten Nachteilen behaftet zu sein. Die Gele werden erhalten, indem man ein oder mehrere höherfunktionelle, höhermolekulare Polyole in Gegenwart von Katalysatoren und gegebenenfalls Füll- und Zusatzstoffen mit einer solchen Menge an organischen Di- und/oder Polyisocyanaten umsetzt, dass eine Isocyanatkennzahl von etwa 15 - 60 resultiert. Unter "Isocyanatkennzahl" wird das Äquivalenzverhältnis (NCO/OH) x 100 verstanden. Wie gefunden wurde, entstehen nur dann erfindungsgemäße, elastische Gele, die aus einer kovalent vernetzten Polyurethanmatrix und einem oder mehreren darin fest (d.h. ohne die Gefahr eines störenden Ausschwitzens) gebundenen Polyolen aufgebaut sind, wenn die miteinander reagierenden Isocyanat- bzw. Polyolkomponenten eine gewisse Mindestfunktionalität aufweisen und wenn das bzw. die Polyole im wesentlichen frei von Anteilen mit einer OH-Zahl von mehr als 112 bzw. einem Molekulargewicht unterhalb von 800, vorzugsweise unterhalb von 1000 sind.

Es wurde damals auch gefunden, dass man Gelmassen mit verbesserter Depotwirkung, gleichmäßiger Wirkstoffabgabe, hoher Wirkstoffkonzentration, guter Stabilität der Wirkstoffzusätze und guter Migrationsfähigkeit der Wirkstoffe erhält, wenn man Wirkstoffe als Zusatzstoffe bei der PU-bildenden Reaktion in höhermolekularen Polyolen löst bzw. dispergiert und Di- und/ oder Polyisocyanate, sowie Katalysatoren und gegebenenfalls übliche Zusatzstoffe zumischt.

Die Vorteile der dieser Gelmassen liegen darin, dass in der nur teilweise vernetzten Polyurethanmatrix ein hoher Anteil an höhermolekularen Polyolen vorliegt, welcher die Migration und Abgabe der Wirkstoffe nach außen ermöglicht und steuert.

Nachteilig ist jedoch die Oberfläche dieser Gele: Sie ist zu gummiartig und daher schmutzempfindlich und fühlt sich nicht gut (zu klebrig) an und hat daher eine unbefriedigende Haptik. Daher wird entweder eine Folie oder Textil als Schutz aufgebracht. Die Folien sind z.B. auch notwendig, um das Gel überhaupt zu handhaben. Dies ist erstens kostenintensiv und erlaubt außerdem nur eingeschränkten oder keinen Einsatz des Gels in verschiedenen Anwendungen, wo diese Folie stört (z.B. im Automobilinnenraum die Mittelkonsole).

Eine Lackierung mit einem elastischen Netzwerk wäre hier eine Alternative. Bekannt ist die Beschichtung von z.B. über Spritzguss hergestellten Kunststoffsubstraten mit zweikomponentigen, konventionellen (lösemittelhaltigen oder wässrigen) Klar- oder Decklacken im Sprühverfahren. Dadurch kann ein Schutz der Oberfläche bereits mit einer 10-100 µm dünnen Beschichtung erreicht werden. Die Elastizität der Beschichtung ist der der Substrate angepasst und liegt meist im Bereich <100 %. Hierbei ist zu unterscheiden zwischen der Biegeelastizität, die für gewöhnlich die vertikale Verformbarkeit angibt und der Reißdehnung, die die horizontale Verformbarkeit angibt. Bei der Reißdehnung ist zusätzlich das Rückstellverhalten nach Verformung anzugeben, das zeigt, ob eine plastische oder elastische Verformung aufgetreten ist. Kunststofflacke oder die noch härteren Metalllacke zeigen dieses Verhalten normalerweise nicht.

Zur Beschichtung von Kunststoffsubstraten werden im Gegensatz zur Lackierung von Metallteilen flexible Lacke eingesetzt, da z.B. harte Lacke eine Versprödung des Gesamtbauteils (Kunststoff+Lack) bewirken würde. Dies könnte z.B. bei tiefen Temperaturen eine Zersplitterung des Bauteils durch Risspropagation im Falle eines mechanischen Kontaktes zur Folge haben. Elastische Kunststofflacke haben daher im allgemeinen Reißdehnungen von ca. 5-100 % und können im Biegetest (Umbiegen eines lackierten Bayflex-Substrates) bis -20°C ohne Rissbildung belastet werden. Das Rückstellverhalten ist jedoch meist mäßig, da der Lack ein festes Polymernetzwerk ausgebildet hat. Außerdem zeigen z.B. Thermoplaste im Allgemeinen <5 % Rückstellverhalten. Elastische Substrate wie z.B. feste Gele zeigen jedoch bei deutlich höherer Reißdehnung (teilweise >1000 %) immer noch ein intaktes Rückstellverhalten zum Originalzustand.

Um die Oberfläche von Gelen wie oben angedeutet z.B. vor Verschmutzung, Verkratzung, Licht- und Wettereinflüssen sowie gegen Lösemittel zu schützen, wäre eine Lackierung sinnvoll. Allerdings sind die typischen, elastischen Kunststofflacke nicht ausreichend, vor allem bzgl. zweier Aspekte:
- die Haftung auf solchen elastischen, rückstellfähigen Substrates (auch nach Bewitterung) ist mangelhaft;
- das Dehnungs- und Rückstellverhalten elastischer Substrate wird durch eine nicht genügend elastische Lackschicht beeinträchtigt (so kann z.B. das gesamte Gel reißen oder der Lack abplatzen).

Bei den Gelen kommt dann als zusätzliche Anforderung, dass bei vielen Anwendungen die Oberfläche haptische Eigenschaften haben sollte (Fahrradsattel, Sitzpolster etc.), gleichzeitig auch Beständigkeiten gegen Lösemittel, Chemikalien (Säuren, Laugen, Waschlösung) und auch Bewitterung haben muss. Dies ist mit Beschichtungen herkömmlichen Typs nicht zu erreichen. So ist auch die in der EP-A 057 839 beschriebene Impranil^{®} C Lösung als Beschichtung unzureichend, da die Beständigkeit gegen Lösemittel nicht gewährleistet ist.

Aufgabe der Erfindung war nun Beschichtungssysteme bereitzustellen, das die genannten Nachteile nicht aufweisen und darüber hinaus Vorteile in Bezug auf Handhabung und Haptik (Griffverhalten auf der Oberfläche) bietet.

Überraschend wurde nun gefunden, dass in einem Kombinationsaufbau bestehend aus einer Grundschicht aus einem hochmolekularen, gelartigen Polyurethan und einer Deckschicht aus PU-Lack eine Gesamtbeschichtung erzielt werden kann, die die gewünschten Eigenschaften hat:
- hohe horizontale Haptik durch die gelartige Grundschicht,
- hohe vertikale Haptik durch die Deckschicht aus PU-Lack,
- hohe Beständigkeit gegen Umwelteinflüsse durch die Deckschicht,
- hohes Dehnvermögen und gleichzeitig hohes Rückstellverhalten nach Druck- und/oder Zugbelastung beider Schichten.

Die vorliegende Erfindung betrifft eine mehrschichtige Beschichtung, bestehend aus
a) einer Grundschicht aus hochmolekularen, gelartigen Polyurethanen
b) einer Deckschicht bestehend aus Polyurethan-Lack
welche auf beliebige Substrate appliziert werden kann und in allen Bereichen der industriellen Anwendung eingesetzt werden kann, wo eine Oberfläche geschaffen werden soll, die sich durch
- hervorragenden Softeffekt
- und hohe Beständigkeiten gegen Umwelteinflüsse
- und/oder einfache Herstellung und Verarbeitung
- und hohes Dehnvermögen und Rückstellvermögen (um sich den mechanischen Eigenschaften aller Substrate ideal anpassen zu können)
auszeichnet und die obigen Nachteile nicht hat, sowie deren Herstellung und Verwendung.

Überraschend würde weiterhin gefunden, dass die damals in der EP-A 0 057 838 und 0 057 839 beschriebenen Vorteile der Gele durch diesen Systemaufbau nicht beeinträchtig sondern sogar verbessert werden. Der Systemaufbau gelartiges PU + Deckschicht erfüllt damit auch weiterhin die gesamten Vorteile der bekannten Gele (EP-A 005 739 und EP-A 005 738).

Darüber hinaus ergeben sich jedoch noch eine ganze Reihe von weiteren Vorteilen:
- Das Gel muss nicht mehr einer Folie oder mit Textil kaschiert werden, sondern wird nachträglich oder vorzugsweise direkt in der Form lackiert und kann dann gemeinsam mit der dickschichtigen Gelmasse auf andere Substrate aufgebracht werden.
- Dies ermöglicht die Herstellung der Bauteile in einem Arbeitsgang.
- Die Oberflächeneigenschaften sind deutlich verbessert (Haptik, Beständigkeiten, Staubfreiheit). Damit wird auch die Handhabung deutlich verbessert.
- Optische Effekte (bestimmte Unifarben, Metallicfarben oder Hochglanz) werden ermöglicht. Dies ist mit der bisherigen Kombination nicht möglich.
- Auch eine komplett neue Applikation wird ermöglicht: Das Aufbringen der gelartigen PU-Grundierung auf beliebige Substrate durch Aufrakeln, Aufsprühen, Aufgießen und anschließende Versiegelung der Oberfläche durch die PU-Lackierung.
- Ebenfalls neu ist dann auch eine Sandwich-Kombination: PU-Lack/gelartige Grundierung/PU-Lack. Dies ermöglich z.B. die Herstellung von Folien, die beidseitig mit der Oberflächenvergütung versehen sind. Auch weitere Systemaufbauten sind damit möglich (z.B. PU-Deckschicht/PU-Grundierung/Trägermaterial/PU-Grundierung/PU-Deckschicht).

Die Erfindung betrifft daher
a) die Herstellung und Formulierung gelartiger Grundschichten vergleichbar zu EP-A 0 057 838 in einer Schichtdicke von 0,01-100 mm in Kombination mit
b) einer PU-Schutzschicht in einer Schichtdicke von 0.005-2 mm lösemittelfreien, lösemittelhaltigen oder wässrigen hochelastischen Polyurethanbeschichtungen. Die erfindungsgemäßen Beschichtungen zeigen hohes Dehnungs- und Rückstellverhalten.

Gegenstand der Erfindung sind somit Beschichtungssysteme aus
I) wasserfreien, gegebenenfalls wirkstoffhaltigen, gelartigen, hochmolekularen Polyurethanmassen bestehend aus
   (1) 15-62 Gew.-%, bevorzugt 20-57 Gew.-%, besonders bevorzugt 25-47 Gew.-%, bezogen auf die Summe aus (1) und (2), einer hochmolekularen kovalent vernetzten Polyurethanmatrix und
   (2) 38 - 85 Gew.-%, bevorzugt 80-43 Gew.-%, besonders bevorzugt 75-53 Gew.-%, bezogen auf die Summe aus (1) und (2), eines in der Matrix durch Nebenvalenzkräfte fest gebundenen flüssigen Dispersionsmittels, das aus einer oder mehreren Polyhydroxylverbindungen mit einem Molekulargewicht zwischen 1000 und 12000, vorzugsweise zwischen 1700 und 6000 und einer OH-Zahl zwischen 20 und 112, vorzugsweise zwischen 28 und 84, besonders bevorzugt zwischen 30 und 56, besteht, wobei das Dispersionsmittel im wesentlichen keine Hydroxylverbindungen mit einem Molekulargewicht unter 800, vorzugsweise keine unter 1000, enthält, sowie gegebenenfalls
   (3) 0,1-100 Gew.-%, bezogen auf die Summe aus (1) und (2), an Füll- und/oder Zusatzstoffen, sowie gegebenenfalls Katalysatoren für die polyurethanbildende Reaktion, wobei gegebenenfalls 0,1 bis 50 Gew.-% der Additive Wirkstoffe sein können,
   und
II) lösemittelhaltigen, lösemittelfreien und/oder wässrigen Polyurethandecklacken auf Basis von
   a) 0 - 50 Gew.-%, bezogen auf den gesamten Decklack, an Polyurethanaddukten,
   b) 0 - 90 Gew.-%, bezogen auf den gesamten Decklack, flexiblen Polyolen mit einer Tg von -100 bis 25°C und einem OH-Gehalt von 0 bis 25 Gew.-%,
   c) 1,7 - 60 Gew.-%, bezogen auf den gesamten Decklack, an Polyisocyanaten mit einem NCO-Gehalt von 4 bis 50 Gew.-%.

Die erfindungsgemäßen Beschichtungssysteme bestehen vorzugsweise aus 20 bis 57 Gew.-% der hochmolekularen Matrix und 80 bis 43 Gew.-% des flüssigen Dispersionsmittels, wobei die hochmolekulare Matrix ein Umsetzungsprodukt aus einem oder mehreren Polyisocyanaten und einer oder mehreren Polyhydroxylverbindungen mit einem Molekulargewicht zwischen 1000 und 12000 und einer OH-Zahl zwischen 20 und 112 ist, wobei das Produkt aus NCO-Funktionalität der Polyisocyanate und OH-Funktionalität der Polyhydroxylverbindungen mindestens 5,2 beträgt.

Vorzugsweise besteht das erfindungsgemäß eingesetzte Dispersionsmittel aus einer oder mehreren Polyhydroxylverbindungen mit einem Molekulargewicht von 1700 bis 6000 und einer OH-Zahl von 28 bis 84.

Die erfindungsgemäßen Beschichtungsmittel basieren auf flexiblen Polyolen mit einer Tg von -100 bis 25°C und einem OH-Gehalt von 0 bis 25 Gew.-% und sind vernetzt mit 1,7 - 60 Gew.-%, bezogen auf den gesamten Decklack, Polyisocyanaten mit einem NCO-Gehalt von 4 bis 50 Gew.-%.

Abmischung der Polyhydroxyverbindungen zur Verbesserung der Chemikalienbeständigkeit mit z.B. Polyacrylaten sind ebenfalls erfindungsgemäß geeignet.

Die Decklacke des erfindungsgemäßen Beschichtungssystems sind z.B. Formulierungen von Polyurathandecklacken mit
- bis zu 150% Füllstoffen (z.B. Titandioxid)
- bis zu 10% Katalysator (wie DBTL)
- bis zu 20% Wirkstoffen (wie Bioziden, Duftstoffen)
- bis zu 10% Additiven (wie Verlaufshilfsmittel)
- bis zu 5% Lichtschutzmittel (wie Tinuvin^{®} 1130) sowie
- gegebenenfalls Farbstoffe, Pigmente, Metallflitter etc.

Die erfindungsgemäßen Beschichtungssysteme eignen sich z.B. zur Herstellung einer mehrschichtigen Beschichtung bestehend aus
- einer gelartigen Grundierung mit einer Schichtdicke von 30 µm-10 mm,
- einer Deckschicht aus z.B. PU-Lack mit einer Schichtdicke von 5 µm-2 mm.

Die Herstellung einer mehrschichtigen Beschichtung erfolgt erfindungsgemäß durch
a) Eintrag der gelartigen Grundierung in eine Werkzeugform mittels Rakeln, Gießen, Sprühen, Injiziieren;
b) Aufbringen der Deckschicht mittels Rakeln, Gießen, Sprühen, Injiziieren;
c) beliebige Variation von a und b hinsichtlich zeitlicher Veränderung, z.B.
   - zuerst Einbringen der Deckschicht auf die Werkzeugwand und dann Einbringen der Grundierung;
   - zuerst Einbringen der Grundierung und dann Applikation des Decklackes auf die Grundierung und Ausreaktion im geschlossenen oder geöffneten Werkzeug;
   - zuerst Einbringen der Grundierung und dann Applikation des Decklackes auf die Werkzeugwand und Ausreaktion im geschlossenen Werkzeug;
d) Einbringen des zu beschichtenden Trägermaterials in das Werkzeug durch
e) Injektion (z.B. Kunststoffe, Duroplaste, etc.),
f) Einlegen (z.B. Metall, Textil, Holz, fertige Bauteile),
g) Rakeln, Gießen, Sprühen (z.B. Folien, PU-Lack, Sprühhäute),
h) Applikation der Grundierung und des Decklackes mit den in a) und b) beschriebenen Variationen auf das zu beschichtende Trägermaterial, Aushärtung der Beschichtung und Entnahme des fertig beschichteten Bauteils aus der Werkzeugform,
i) Herstellung der Grundierung und des Decklackes in der Werkzeugform und anschließendes Einbringen des zu beschichtenden Trägermaterials in die Form, Ausreaktion und Entnahme des fertig beschichteten Bauteils.

Unterschiedliche mehrschichtige Strukturen sind erfindungsgemäß möglich, z.B. mit folgendem Aufbau:
a) Decklack / Grundierung / Decklack;
b) Decklack / Grundierung / Decklack / Träger (Herstellung gemäß a) und anschließende Applikation auf beliebigen Träger durch die bekannten Klebtechniken mit z.B. 1K oder 2K-PU-Klebstoffen);
c) Decklack / Grundierung / Träger / Grundierung / Decklack;
d) Träger 1 / Grundierung / Decklack / Träger 2 mit Träger 1 z.B. Folien, Textil und Träger 2 wie in 10 beschrieben beliebige Materialien.

Ebenfalls Gegenstand der Erfindung ist die Verwendung der erfindungsgemäßen Polyurethansysteme für Beschichtungen die ein besonderes Griffverhalten (Haptik) erfordern, beispielsweise ein weiches Griffverhalten zeigen (soft feel Haptik).

Die Haptik wird zum einen über den Gehalt an flexiblen Polyolen auf Basis von Polyester, Polyester/Polyacrylat oder Polyacrylat (gegebenenfalls Mischung aus OHfunktionellen und nichtfunktionellen Polyolen) erreicht. Auch die zugesetzten üblichen Füllstoffe und Additive können die Haptik beeinflussen.

Alle erfindungsgemäßen Lacksysteme lassen sich im konventionellen Betrieb verarbeiten. Speziell die Applikation im IMC-Verfahren (in mould coating) ist Bestandteil der Erfindung. Dieses Verfahren sieht die Applikation der Lacke in eine oder beide Werkzeughälften vor, die gelartige Grundierung wird zwischen den Werkzeughälften wie in EP-A 005 783 beschrieben hergestellt und die komplette Beschichtung kann der Form entnommen werden und dann auf beliebige Träger (Metall, Holz, Kunststoff, Keramik, Stein, Beton, Glas, mineralische Untergründe etc.) aufgebracht werden.

Ebenfalls möglich ist die Herstellung eines Bauteils direkt in der Form:
- Einlegen des zu beschichtenden Materials in eine Werkzeugform,
- Beschichtung einer Werkzeughälfte mit
   - aus der PU-Chemie bekannten Trennmitteln (z.B. Stearat),
   - der Deckschicht aus PU-Lack und anschließender Antrocknung dieses Lackes auf der Werkzeugoberfläche,
- Schließen der Werkzeughälften,
- Injektion der gelartigen Grundierung zwischen Deckschicht und Träger,
- Entnahme des kompletten Bauteils aus Träger/Grundierung/Deckschicht.

Die erfindungsgemäßen Polyurethansysteme (Grundierung+Deckschicht) können zur Herstellung der unterschiedlichsten Beschichtungssysteme verwendet werden. Hervorzuheben sind folgende Kombinationen:
- Träger (Holz, Metall, Glas, Keramik, Kunststoff, Gummi, Folien, PU-Lack),
- gelartige Grundierung (farbig, farblos, transparent, fluoreszierend, Wirkstoffhaltig, wirkstoffabgebend, transluszent, duftstoffhaltig),
- PU-Decklack (farbig, farblos, transparent, fluoreszierend, duftstoffhaltig, transluszent, metallic Farbeffekt, Softeffekt).

Gegenstand der Erfindung ist auch ein Verfahren zur Herstellung des erfindungsgemäßen Beschichtungssystems aus
I) gegebenenfalls wirkstoffhaltigen, im wesentlichen wasserfreien Gelmassen, dadurch gekennzeichnet, dass man
   a) ein oder mehrere Di- und/oder Polyisocyanate mit
   b) einer oder mehreren Polyhydroxylverbindungen mit einem Molekulargewicht zwischen 1000 und 12 000, und einer OH-Zahl zwischen 20 und 112,
   c) gegebenenfalls 0,1 bis 50 Gew.-% an Wirkstoffen,
   d) gegebenenfalls Katalysatoren für die Reaktion zwischen Isocyanat- und Hydroxylgruppen,
   e) sowie gegebenenfalls aus der Polyurethanchemie an sich bekannten Füll- und Zusatzstoffen umsetzt, wobei die Isocyanatkennzahl zwischen 15 und 50 liegt, das Produkt der Funktionalitäten der Polyurethan-bildenden Komponenten mindestens 5,2 beträgt und die Polyhydroxylverhindungen im wesentlichen frei an Hydroxylverbindungen mit einem Molekulargewicht unter 800 sind, und
II) zusätzlich eine Polyurethanbeschichtung
mittels Sprühverfahren, Rakeln oder anderen Auftragstechniken auf dieses Gel (I) aufbringt.

Erfindungsgemäß kann der Decklack der Komponente II) nachträglich oder vorzugsweise durch Aufbringen auf die Wand oder Wände der Form, in der das Gel hergestellt wird und anschließender Gelbildung in dieser Form aufgebracht werden.

Bei den erfindungsgemäß zu verwendenden Polyolen für die gelartige Grundierung handelt es sich vorzugsweise um die in der Polyurethanchemie an sich bekannten, bei Raumtemperatur oder wenig oberhalb flüssigen Polyhydroxypolyester, -polyether, -polythioether, -polyacetale, -polyearbonate oder -polyesteramide des oben angegebenen Molekulargewichtsbereichs, OH-Zahlbereichs und OH-Funktionalität.

Die in Frage kommenden Hydroxylgruppen aufweisenden Polyester sind z.B. Umsetzungsprodukte von mehrwertigen, vorzugsweise zweiwertigen und gegebenenfalls zusätzlich drei- und vierwertigen Alkoholen mit mehrwertigen, vorzugsweise zweiwertigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Polycarbonsäuren und deren Derivate seien genannt: Adipinsäure, Sebacinsäure, Phthalsäure, Phthalsäureanhydrid, Tetrahydro- oder Hexahydrophthalsäureanhydrid, Isophthalsäure, Trimellitsäure, Maleinsäureanhydrid, di- und trimerisierte ungesättigte Fettsäuren, Terephthalsäuredimethylester und Terephthalsäure-bis-glykolester.

Als mehrwertige Alkohole kommen z.B. Ethylenglykol, Propylenglykol, Butandiol-1,4 und/oder -2,3, Hexandiol-1,6, Neopentylglykol, 1,4-Bis-hydroxymethylcyclohexan, 2-Methyl-1,3-propandiol, Glycerin, Trimethylolpropan, Hexantriol-1,2,6, Pentaerythrit, Chinit, Mannit, und Sorbit, Formit, Methylglykosit, ferner Di-, Tri-, Tetra- und höhere Polyethylen-, Polypropylen-, sowie Polybutylen-Glykole in Frage.

Die Polyester können anteilig endständige Carboxylgruppen aufweisen. Auch Polyester aus Lactonen, z.B. ε-Caprolacton oder Hydroxycarbonsäuren, z.B. 8-Hydroxycapronsäure, sind einsetzbar.

Auch die erfindungsgemäß in Frage kommenden, mindestens 2, in der Regel 2 bis 8, vorzugsweise 2 bis 3, Hydroxylgruppen aufweisenden Polyole sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren, oder durch Anlagerung dieser Epoxide, vorzugsweise Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol, Diethylenglykol, Diethylolpropan, Glycerin, Sorbit, Succrose, Formit oder Formose, sowie 1-(4,4'-Dihydroxydiphenyl)propan, Anilin, Ethylendiamin oder Ethanolamin hergestellt.

Auch OH-Gruppen aufweisende Polythioether, Polybutadiene, Polyacetale, Polycarbonate oder Polyesteramide sind einsetzbare Ausgangsprodukte. Auch bereits Urethan- und/oder Harnstoffgruppen enthaltende Polyhydroxylverbindungen, sowie gegebenenfalls modifizierte natürliche Polyole, wie Ricinusöl, sind geeignet.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten wenn man Polyadditionsreaktionen (z.B. Umsetzungen zwischen Polyisocyanaten und aminofunktionellen Verbindungen).bzw. Polykondensationsreaktionen (z.B. zwischen Formaldehyd und Phenolen und/oder Aminen) in situ in den oben genannten, Hydroxylgruppen aufweisenden Verbindungen ablaufen lässt.

Auch die durch Vinylpolymerisate modifizierten Polyhydroxylverbindungen, wie sie z.B. die Polymerisation von Styrol und/oder Acrylnitril in Gegenwart von Polyethern oder Polycarbonatpolyolen erhalten werden, sind für das erfindungsgemäße Verfahren geeignet.

Vertreter der genannten erfindungsgemäß zu verwendenden höhermolekularen Polyhydroxylverbindungen sind z.B. in High Polymers, Vol. XVI, "Polyurethanes, Chemistry and Technology", verfasst von Saunders - Frisch, Interscience Publishers, New York, London, Band I, 1962, Seiten 32 42 und Seiten 44 - 54 und Band II, 1964, Seiten 5 - 6 und 198 - 199, ferner im Kunststoff-Handbuch Band VII, Vieweg-Höchtlen, Carl-Hanser-Verlag, München, 1966, z.B. auf den Seiten 45 bis 71, sowie in der DE-A 29 20 501, Seite 17 bis Seite 24 aufgeführt. Selbstverständlich können Mischungen der obengenannten Verbindungen, z.B. Mischungen von Polyethern und Polyestern, eingesetzt werden.

Bevorzugt werden erfindungsgemäß die in der Polyurethanchemie an sich bekannten Polyhydroxypolyether der genannten Art mit 2 bis 6, besonders bevorzugt mit etwa 2 bis 3 Hydroxylgruppen vom Molekül und einem statistisch oder segmentiert eingebauten Ethylenoxidgehalt von mindestens 10 Gew.-%, vorzugsweise mehr als 15, besonders bevorzugt mit mindestens 20 Gew.-%, als höhermolekulare Polyole eingesetzt. Ganz besonders bevorzugt werden Polypropylenetherpolyole mit mindestens 20 Gew.-% Ethylenoxid, bei denen mindestens 15 Gew.-% der OH-Endgruppen primäre Hydroxylgruppen sind.

Der Gehalt an Polyolen in der erfindungsgemäß zu verwendenden, gelbildenden Mischung beträgt etwa 80 - 99 Gew.-%, vorzugsweise etwa 85 bis 98 Gew.-%, bezogen auf das Gesamtgewicht der gelbildenden Mischung aus Polyurethanausgangskomponenten.

Als Beispiele für erfindungsgemäß geeignete flexible lösemittelhaltige, lösemittelfreie oder wässrige Polyole für die PU-Deckschicht sind zu nennen:
1) Lineare Polyesterpolyole mit einem OH-Gehalt von 1-25 Gew.-% und einer Viskosität von 100-5000 mPa*s, wie z.B. Desmophen^{®} 670, Desmophen^{®} VP LS 2328 oder Bayhydrol^{®} PT 241;
2) Hydroxyfunktionelle Polycarbonat-Polyester mit einem OH-Gehalt von 1-10 Gew.-% und einer Viskosität von 1500-10.000 mPa*s, wie z.B. Desmophen^{®} VP LS 2236 und Desmophen^{®} C 200;
3) PES/PAC-Dispersionen wie z.B. Bayhydrol^{®} VP LS 2058;
4) Polyetherpolyole mit einem OH-Gehalt von 1-25 Gew.-% und einer Viskosität von 100-3000 mPa*s, wie z.B. Desmophen^{®} 550U;
5) Polyurethanadukte mit einer Viskosität von 100-55000 mPa*s, wie z.B. Impranil^{®} C, Desmolac^{®} 4340 (z.B. auf Basis IPDI, HDI, W, NTI) oder Bayhydrol^{®} DLN.

Prinzipiell geeignet sind alle elastischen Polyole mit entsprechendem Dehn- und Rückstellverhalten.

Flexible Polyole zeigen erfahrungsgemäß eine schlechtere Beständigkeit gegen Lösemittel, Chemikalien, Frei- und Kurzbewitterung als vergleichsweise spröde Polyole auf Basis von Polyestern oder Polyacrylaten.

Zur Herstellung der erfindungsgemäßen Polyolkomponente können Mischungen von flexiblen und spröden Polyolen eingesetzt werden.

Als Beispiele für erfindungsgemäß geeignete lösemittelhaltige, lösemittelfreie oder wässrige Polyole zur Verbesserung der Beständigkeit sind zu nennen:
1) Hydroxyfunktionelle Polyesterpolyacrylate mit einem OH-Gehalt von 1-22 Gew.-% und einer Viskosität von 1000-5000 mPa*s, wie Desmophen® Laborprodukt TIK 294, Bayhydrol® VP LS 2290;
2) Niedrigviskose Polyacrylat-/ Polymetacrylatpolyole mit einem OH-Gehalt von 1-23 Gew.-% und einer Viskosität von 700-1500 mPa*s, wie Desmophen® Laborprodukt TIK 507 und Desmophen® Laborprodukt TIK 516 und Bayhydrol® VP LS 2235/1 ;
3) Verzweigte Polyesterpolyole mit einem OH-Gehalt von 12-20 Gew.-% und einer Viskosität von 1000-4000 mPa*s, wie Desmophen^{®} VP LS 2249/1.

Ansonsten gelten die gleichen Bedingungen für Polyole wie in den Beschreibungen der Polyole für die PU-Grundierung oben.

Bei den in den erfindungsgemäßen gelartigen Grundierungen zu verwendenden organischen Di- und/oder Polyisocyanaten handelt es sich um die in der Polyurethan-Chemie an sich bekannten aliphatischen, cycloaliphatischen, araliphatischen, aromatischen und heterocyclischen Di- bzw. Polyisocyanate, wie sie z.B. von W. Siefken in Justus Liebigs Annalen der Chemie, 562, Seiten 75 bis 136 beschrieben werden, wobei die Diisocyanate als Monomere oder in modifizierter Art, z.B. biuretisiert, allophanatisiert, carbodiimidisiert, trimerisiert oder polyolmodifiziert, Verwendung finden können. Beispielhaft seien genannt: 1,6-Hexamethylendiisocyanat, 1,12-Dodecandiisocyanat, ferner Cyclobutan-1,3-diisocyanat, Cyclohexan-1,3- und -114-diisocyanat, sowie beliebige Gemische dieser stellungs- und/oder Stereoisomeren, 1-Isocyanato-3,3,5-tri-methyl-5-isocyanatomethyl-cyclohexan, 2,4- und/oder 2-,6-Hexahydrotoluylendiisocyanat, Hexahydro-1,3- und/oder -1,4-phenylen-diisocyanat, Perhyclro-2,4'- und/oder -4,41diphenylmethan-diisocyanat, sowie beliebige Gemische dieser Stellungs- und/oder Stereoisomeren, ferner 1,3- und 1,4-Phenylendiisocyanat, 2,4- und 2,6-Toluylendiisocyanat, Diphenylmethan-2,41- und/oder -4,41-diisocyanat, sowie beliebige Gemische ihrer Isomeren, und Naphthylen-1,5-diisocyanat.

Ferner kommen beispielsweise in Frage: Triphenylmethan 4,4',4"-Triisocyanat, Polyphenyl-polymethylenpolyisocyanate, wie sie durch Anilin-Formaldehyd-Kondensation und anschließende Phosgenierung erhalten werden, und p-Isocyanatophenylsulfonyl-isocyanate, perchlorierte Arylpolyisocyanate, Carbodiimidgruppen aufweisende Polysocyanate, Norbomandiisocyanate, Allophanatgruppen aufweisende Polyisocyanate, Isocyanuratgruppen aufweisende Polyisocyanate, Urethangruppen aufweisende Polyisocyanate, acylierte Harnstoffgruppen aufweisende Polyisocyanate, Biuretgruppen aufweisende Polyisocyanate, durch Telomerisationsreaktionen hergestellte Polyisocyanate, Estergruppen aufweisende Polyisocyanate, Umsetzungsprodukte der o.g. Isocyanate mit Acetalen und polymere Fettsäureester enthaltende Polyisocyanate in Betracht. Diese für die Umsetzung geeigneten Polyisocyanate werden eingehend in der EP-A 0 057 839 beschrieben. Bevorzugte aromatische Di- und Triisocyanate sind 2,4- und/oder 2,6-Toluylendiisocyanat, und 4,4'- und/oder 2,4'-Diphenylmethandiisocyanat und ihre modifizierten Typen, sowie ihre mit tri- und tetrafunktionellen Polyolen hergestellten mehrfunktionellen Derivate oder Trimerisierungsprodukte.

Bevorzugte Polyisocyanate sind z.B. 1,6-Hexamethylendiisocyanat, Isophorondiisocyanat, Methylcyclohexan-2,4- und/oder -2,6-diisocyanat, Dicyclohexylmethan-2,41 und/oder -4,4'-düsocyanate und ihre biuretisierten, allophanatisierten oder trimerisierten polyfunktionellen Derivate.

Alle oben genannten Di- und/oder Polyisocyanate können auch in beliebigen Gemischen eingesetzt werden. Der Gehalt an Di- und/oder Polyisocyanaten in den gelbildenden Mischungen aus Polyolen und Polyisocyanaten beträgt ca. 1 bis 20 Gew.-%, vorzugsweise 2 bis 15 Gew.-%, bezogen auf das Gesamtgewicht der Mischung.

Bei den zur Gelbildung zu verwendenden Katalysatoren für die Reaktion zwischen Hydroxyl- und Isocyanatgruppen handelt es sich vorzugsweise um solche der in der Polyurethanchemie an sich bekannten Art, z.B. tertiäre Amine, wie Triethylamin, N-Tetramethylylendiamin, 1,4-Diaza-bicyclo-(2,2,2)-octan, N,N-Dimethylbenzylamin, X-Methyl-KI-dimethylaminoethyl piperazin, Pentamethyldiethylentriamin, oder auch als Katalysatoren bekannte Mannichbasen aus sekundären Aminen, wie Dimethylamin und Aldehyden (Formaldehyd) oder Ketonen (Aceton) und Phenolen in Frage, ferner Silaamine mit Kohlenstoff-Silicium-Bindungen, z.B. 2,2,4-Trimethyl-2-silamorpholin und 1,3-Diethylamino-methyl-tetramethyl-disiloxan.

Erfindungsgemäß können auch organische Metallverbindungen, insbesondere organische Zinnverbindungen, als Katalysatoren verwendet werden, z.B. Zinn-(II)-acetat, Zinn-(II)ethylhexoat und die Zinn-(IV)-Verbindungen, z.B. Dibutylzinndichlorid, Dibutylzinndilaurat, Dibutylzinnmaleat in Betracht. Weitere geeignete Katalysatoren sind in der DE-A 29 20 501 auf den Seiten 29, Zeile 5 bis Seite 31, Zeile 25 beschrieben.

Die Katalysatoren werden vorzugsweise in einer Menge zwischen 0,01 und 10 Gew.-%, bezogen auf das Gesamtgewicht des Gels, eingesetzt. Selbstverständlich können alle Katalysatoren als Gemische eingesetzt werden.

Die in der EP-A 0 057 389 beschriebenen Zusatzstoffe (Wirkstoffe, Füllstoffe, Additive, Hilfsmittel) können erfindungsgemäß ebenfalls verwendet werden.

In der erfindungsgemäßen Härterkomponente für die Deckschicht werden bevorzugt aliphatische Polyisocyanate auf Basis niedrigviskoser Polymere des 1,6-Hexamethylendiisocyanats (HDI), 4,4'-Diisocyanatodicyclohexylisocyanaturethans (W), Triisocyanatononans (NTI, TIN) oder Isophorondiisocyanats (IPDI) eingesetzt, die einzeln oder in Kombination verwendet werden können. Wenn die Lichtechtheit der aliphatischen Polyisocyanate nicht gefordert ist, können die bekannten aromatischen Polyisocyanate ebenfalls eingesetzt werden (z.B. MDI oder TDI).

Als Beispiele für Polyisocyanate zur erfindungsgemäßen alleinigen Verwendung oder zur erfindungsgemäßen Verwendung in Kombinationen (lösemittelhaltige, lösemittelfeie bzw. wässrige Systeme) in Komponente II sind zu nennen:
1) Niedrigviskose Polyisocyanate auf Basis von Biureten des HDI mit einem Gehalt von 15-24 Gew.-% und einer Viskosität von 100- 4000 mPa*s, wie Desmodur® N 75 und Desmodur® N 3200;
2) Niedrigviskose Trimerisate des HDI und deren Modifikationen mit Allophanat und Uretdion mit einem NCO-Gehalt von 12-25 Gew.-% und einer Viskosität von 100-4000 mPa*s, wie Desmodur® VP LS 2102, Desmodur® N 3300, Desmodur® N 3400, Desmodur® N 3600 oder Bayhydur® 3100;
3) Elastifizierende Polyisocyanate mit einem NCO-Gehalt von 4-25 Gew.-% und einer Viskosität von 1000-10000 mPa*s, wie z.B.- Desmodur® VP LS 2010/1 oder Bayhydur® VP LS 2306;
4) Triisocyanatononan mit einem NCO-Gehalt von 48-52 Gew.-% bei einer Viskosität von 10-100 mPa*s;
5) Mischungen aus Trimerisaten des IPDI und Trimerisaten und/oder dem Uretdion des HDI mit einem NCO-Gehalt von 15-22 Gew.-% und einer Viskosität von 1000-5000 mPa*s;
6) Polyisocyanate auf Basis von H₁₂-MDI mit einem NCO-Gehalt von 10-33 Gew.-% und einer Viskosität von 20-10.000 mPa*s, wie z.B. Desmodur® W;
7) Blockierte Polyisocyanate wie Desmodur® VP LS 2253 oder Desmodur® VP LS 2307;
8) sowie analog die restlichen Polyisocyanate wie für die PU-Grundierung oben beschrieben.

Die Farbgebung der aus den erfindungsgemäßen Polyurethansystemen hergestellten Lacke erfolgt über die üblicherweise zur Lackherstellung verwendeten Pigmente und Füllstoffe. Besonders geeignet sind z.B. anorganische Pigmente auf Basis z.B. von Eisenoxid (z. B. Bayferrox® 318M) oder Titandioxid (z.B. Tronox® RKB-4). Auch alle bekannte Farbeffektpigmente können eingesetzt werden.

Als Katalysator zur Herstellung der Decklacke aus den erfindungsgemäßen Polyurethansystemen werden die für 2K-Polyurethansyteme bekannten verwendeten Substanzen wie z.B. organische Verbindungen des Zinns (z.B. Dibutylzinndilaurat oder Dibutylzinndiacetat) oder Zinks (z.B. Zinkoctoat) eingesetzt. Die Menge variiert abhängig von dem verwendetem System, der benötigten Reaktionszeit und der Art des Katalysators zwischen 0,01 und 3,0 Gew.-% des Katalysators, bezogen auf den Harzanteil des Systems.

Zur Verarbeitung der erfindungsgemäßen Systeme werden beispielhaft folgende Verfahren angewendet:

Die beschriebenen Systeme können mittels Aufrakeln, Aufgießen oder Aufsprühen auf einen beliebigen Untergrund oder in eine beliebige Werkzeugform aufgetragen und je nach Lackzusammensetzung bei Raumtemperatur oder forciert z.B. 10-30 min. bei 60-120°C getrocknet werden.

Nach Aushärtung der Filme erhält man hochelastische Beschichtungen (Dehnung bis über 600 %) mit gutem Rückstellvermögen. Die anderen Filmeigenschaften entsprechen mindestens dem gewohnten Standard der konventionellen PUR-Chemie.

Die Herstellung der erfindungsgemäßen, wirkstoffhaltigen Gelgrundierung kann kontinuierlich oder diskontinuierlich vorgenommen werden. Die Arbeitsweise hängt u.a. von der Form ab, die man den erfindungsgemäßen Gelen im Hinblick auf ihre Anwendung geben möchte. Man kann nach dem One-shot- oder dem Prepolymerverfahren arbeiten.

Beim One-shot-Verfahren werden alle Komponenten, d.h. Polyole, Di- und/oder Polyisocyanate, Wirkstoffe, Katalysatoren und gegebenenfalls weitere Füll- und Zusatzstoffe auf einmal zusammengegeben und intensiv miteinander vermischt, wobei die Wirkstoffe vorzugsweise in den Polyolkomponenten gelöst oder dispergiert werden.

Beim Prepolymerverfahren sind zwei Arbeitsweisen möglich. Entweder stellt man zunächst ein Isocyanat-Prepolymer her, indem man einen entsprechenden Anteil der Polyohnenge (+ Wirkstoff) der gesamten, für die Gelbildung vorgesehenen Isocyanatmenge umsetzt, und fügt dann dem erhaltenen Prepolymer die restliche Menge an Polyol (gegebenenfalls weitere Wirkstoffe), sowie gegebenenfalls weitere Füll- und Zusatzstoffe zu und mischt intensiv, oder man setzt die gesamte, für die Gelbildung vorgesehene Menge an Polyol (+ Wirkstoff) mit einem Teil der Polyisocyanatmenge zu einem OH-Prepolymer um und mischt anschließend die restliche Menge an Polyisocyanat zu.

Eine erfindungsgemäß besonders vorteilhafte Arbeitsweise ist eine Variante aus dem One-shot-Verfahren und dem OB-Prepolymer-Verfahren. Hierbei werden das Polyol bzw. Polyolgemisch, die Wirkstoffe, gegebenenfalls die Füll- und Zusatzstoffe, der Katalysator und zwei verschiedene Diisocyanate in einem Schuss zusammengegeben und intensiv vermischt, wobei ein Di- oder Polyisocyanat aromatischer und ein Di- und/oder Polyisocyanat aliphatischer Natur ist. Man kann davon ausgehen, dass durch die stark unterschiedliche Reaktivität der beiden Polyisocyanate zunächst ein Hydroxyl-Prepolymer entsteht, das sodann innerhalb von Minuten mit dem anderen Polyisocyanat unter Gelbildung reagiert. Es werden hierdurch Gele mit besonders hoher Zähigkeit erhalten.

Bei diesen Verfahrensweisen kann die Förderung, Dosierung und Mischung der Einzelkomponenten oder Komponentengemische mit den für den Fachmann in der Polyurethan-Chemie an sich bekannten Vorrichtungen erfolgen

Will man für die Anwendung z.B. Formteile herstellen, so ist die diskontinuierliche Arbeitsweise anzuraten. Soll das erfindungsgemäße Polyurethangel jedoch in Stücken geeigneter Abmessungen hergestellt werden, dann ist eine kontinuierliche Verfahrensweise oft günstiger. In diesem Fall produziert man zunächst eine endlose Folie oder Platte, die man anschließend in einzelne Stücke zerteilen kann und anschließend lackieren kann.

Bei der kontinuierlichen Herstellung kann das gegebenen falls Wirkstoff enthaltende gelfähige Gemisch auch, bevor es durch die Gelbildung erstarrt, gesprüht, gegossen oder gerekelt werden. Hierbei kann das gelfähige, wirkstoffhaltlge Gemisch auf die verschiedenartigsten Materialien auf Basis von natürlichen oder synthetischen Rohstoffen aufgebracht werden, z.B. auf Matten, Vliese, Gewirke, Gestricke, Schaumfolien, Kunststoff-Folien bzw. -platten, oder in gewünschte Formen eingesessen werden.

Ein weiterer Gegenstand der Erfindung ist die Verwendung der erfindungsgemäßen Beschichtungssysteme im IMC (In mould coating) Verfahren.

Beim IMC-Verfahren wird die Komponente II)
a) auf eine oder beide Werkzeughälften (je nach Andordnung und abzubildendem Körper) aufgetragen (per Sprühen, Rakeln, Pinseln, etc.) und leicht angetrocknet (vorzugsweise bei Raumtemperatur oder leicht erhöhten Temperaturen). Die Komponente I) wird dann nachträglich mit den oben beschriebenen Methoden in die Form eingebracht, zusammen mit der Komponente In gehärtet und dann das beschichtete Formteil aus der Form entnommen,
b) nachträglich (nach der Herstellung der Komponente I)) in einen zu definierenden Spalt der Werkzeugform injiziert (nur in der lösemittelfreien Variante möglich) und dann gemeinsam mit Komponente I) gehärtet, und
c) anschließend der nach a) und b) hergestellte Verbund auf den zu beschichtenden Gegenstand aufgebracht.

In einer besonderen Ausführungsform können auch die zu beschichtenden Gegenstände in eine Werkzeugform eingebracht werden und dann in dieser Form erfindungsgemäß beschichtet werden.

Die Bedingungen während der Gelbildung lassen sich auch in der Weise variieren, dass man entweder kompakte oder geschäumte Gele erhält. Wird z.B. Luft in das gelfähige Gemisch eingeschlagen, so erhält man Schaumgele.

Man kann gemäß der Erfindung auch ein Abformen von Gegenständen z.B. durch Umgießen des abzuformenden Körpers mit einer gelbildenden Masse und Entnahme des Formkörpers nach der Gelbildung durchführen.

Erfindungsgemäß können mehrschichtige Beschichtungen hergestellt werden aus
- einer gelartigen Grundierung mit einer Schichtdicke von 30 µm-10 mm und
einer Deckschicht aus PU-Lack mit einer Schichtdicke von 5µm-2 mm.

Mit den erfindungsgemäßen Beschichtungssystemen können mehrschichtige Beschichtungen hergestellt werden durch in der Reihenfolge nicht festgelegte Schritte
a) Eintrag der gelartigen Grundierung in eine Werkzeugform mittels Rakeln, Gießen, Sprühen, Injiziieren,
b) Aufbringen der Deckschicht mittels Rakeln, Gießen, Sprühen, Injiziieren,
c) wobei a und b hinsichtlich zeitlicher Veränderung
   - zuerst Einbringen der Deckschicht auf die Werkzeugwand und dann Einbringen der Grundierung,
   - zuerst Einbringen der Grundierung und dann Applikation des Decklackes auf die Grundierung und Ausreaktion im geschlossenen oder geöffneten Werkzeug,
   - zuerst Einbringen der Grundierung und dann Applikation des Decklackes auf die Werkzeugwand und Ausreaktion im geschlossenen Werkzeug,
   variieren können,
d) Einbringen des zu beschichtenden Trägermaterials in das Werkzeug durch
e) Injektion (z.B. Kunststoffe, Duroplaste, etc.),
f) Einlegen (z.B. Metall, Textil, Holz, fertige Bauteile),
g) Rakeln, Gießen, Sprühen (z.B. Folien, PU-Lack, Sprühhäute),
h) Applikation der Grundierung und des Decklackes mit den in a und b beschriebenen Variationen auf das zu beschichtende Trägermaterial, Aushärtung der Beschichtung und Entnahme des fertig beschichteten Bauteils aus der Werkzeugform,
i) Herstellung der Grundierung und des Decklackes in der Werkzeugform und anschließendes Einbringen des zu beschichtenden Trägermaterials in die Form, Ausreaktion und Entnahme des fertig beschichteten Bauteils.

Im erfindungsgemäßen Rahmen können mehrschichtige Strukturen mit unterschiedlichem Aufbau hergestellt werden, z.B.
a) Decklack / Grundierung / Decklack,
b) Decklack / Grundierung / Decklack / Träger und anschließende Applikation auf Träger durch Klebtechniken mit z.B. 1K oder 2K-PU-Klebstoffen,
c) Decklack / Grundierung / Träger / Grundierung / Decklack,
d) Träger 1 / Grundierung / Decklack / Träger 2 mit Träger 1 wie Folien, Textil und Träger 2 wie in 10 beschrieben beliebige Materialien.

Die erfindungsgemäßen Beschichtungssysteme eignen sich zur Beschichtung der unterschiedlichsten Substrate in unterschiedlichsten geometrischen Formen wie glatte ebene Flächen, Folien, Flächengebilde, Hohlkörper (außen und innen) etc. Die zu beschichtenden Substrate können aus unterschiedlichen Materialien, auch Verbundmaterialien, bestehen z.B. aus Stein, mineralischen Stoffen, Glas, Kunststoffen, Holz, Metallen, Halbmetallen (z.B. Si), faserigen Stoffen, gepressten Substraten oder Polyurethanschäumen.

Die erfindungsgemäßen Beschichtungen eignen sich weiterhin zur genauen Abformung von Modellen aus den unterschiedlichsten Materialien, wie z.B. aus Gips, Holz, Beton, Stahl, Kunststoffen wie Epoxiden oder Polyurethanen, Stein, Keramik oder Metallen wie Kupfer und Eisen, sowie von Knochen, Gelenken, Gebiss- und Zahnformationen. Diese werden dann mit einer mehrschichtigen Beschichtung versehen.

### Beispiele PU-Decklack

### Formulierung 1

| | | |
|---|---|---|
| A) | Desmophen® 670, 80%ig in Butylacetat (MPA) | 33,6 Gew.-% |
| | 1-Methoxyprppylacetat-2 | 48,8 Gew.-% |
| | Dibutylzinndilaurat, 10% ig in MPA | 0,1 Gew.-% |
| B) | Desmodur® N 75, 75% ig in MPA/Xylyol | 17,5 Gew.-% |
| | | 100,0 Gew.-% |

### Formulierung 2

| | | |
|---|---|---|
| A) | Impranil® C, 30% ig in Ethylacetat | 31,9 Gew.-% |
| | Desmophen® 670, 80%ig in MPA | 11,9 Gew.-% |
| | MPA | 48,0 Gew.-% |
| B) | Desmodur® N 75, 75%ig in MPA/Xylol | 8,2 Gew.-% |
| | | 100,0 Gew.-% |

### Formulierung 3

| | | |
|---|---|---|
| A) | Impranil® C, 30% ig in Ethylacetat | 67,7 Gew.-% |
| | Desmophen® 670, 80% ig in MPA | 6,3 Gew.-% |
| | MPA | 18,8 Gew.-% |
| B) | Desmodur® N 75, 75% ig in MPA/Xylol | 5,5 Gew.-% |
| | Desmodur® VP LS 2010/1,100% ig | 1,7 Gew.-% |
| | | 100,0 Gew.-% |

### Formulierung 4

| | | |
|---|---|---|
| A) | Impranil® C, 30% ig in Ethylacetat | 45,7 Gew.-% |
| | Desmolac® 4340,40% ig in Xylol/Isobutanol | 11,4 Gew.-% |
| | MPA | 40,1 Gew.-% |
| B) | Desmodur® N 75, 75% ig in MPA/Xylol | 2,8 Gew.-% |
| | | 100,0 Gew.-% |

### Formulierung 5

| | | |
|---|---|---|
| A) | Impranil® C, 30% ig in Ethylacetat | 48,4 Gew.-% |
| | Desmolac® VP LS 2195/1, 40% ig in Butylacetat/NMP | 12,1 Gew.-% |
| | MPA | 36,5 Gew.-% |
| B) | Desmodur® N 75, 75% ig in MPA/Xylol | 3,0 Gew.-% |
| | | 100,0 Gew.-% |

### Formulierung 6

| | | |
|---|---|---|
| A) | Impranil® C, 30% ig in Ethylacetat | 37,6 Gew.-% |
| | Desmophen® 1652, 100% ig | 11,2 Gew.-% |
| | MPA | 45,3 Gew.-% |
| B) | Desmodur® VP LS 2010/1, 100% ig | 5,9 Gew.-% |
| | | 100,0 Gew.-% |

### Formulierung 7

| | | |
|---|---|---|
| A) | Impranil® C, 30% ig in Ethylacetat | 74,0 Gew.-% |
| | MPA | 22,3 Gew.-% |
| B) | Desmodur® N 75, 75%ig in MPA/Xylol | 3,7 Gew.-% |
| | | 100,0 Gew.-% |

### Formulierung 8

| | | |
|---|---|---|
| A) | Bayhydrol® VP LS 2244/1 | 48,7 Gew.-% |
| | Bayhydrol® PR 240 | |
| | | 48,7 Gew.-% |
| B) | Desmodur VP LS 2307 | 2,6 Gew.-% |
| | | 100,00 Gew.-% |

### Beispiele PU-Grundierung

Zur Grundierung wurden die Beispiele 1 bis 10 der EP-A 57838 eingesetzt.

Die Beispiele 1 bis 10 aus der EP-A 57838 lauten wie folgt:

### Beispiel 1 (aus der EP-A 57 838)

3500 Teile eines Polyethers auf der Basis von Trimethylolpropan mit einer Hydroxylzahl von 56, hergestellt aus 45 % Propylenoxid und 55 % Ethylenoxid, 700 Teile eines Polyethers auf der Basis von Trimethylolpropan mit einer Hydroxylzahl von 34, hergestellt aus 83 % Propylenoxid und 17 % Ethylenoxid und 2800 Teile eines Polyethers auf der Basis von Propylenglykol mit einer Hydroxylzahl von 56, hergestellt aus 100 % Propylenoxid, werden bei einer Temperatur von 22°C mittels eines Labormischers mit Rührscheibe zu einer klaren Lösung verrührt. Zu dieser Lösung werden 301 Teile eines Biuretpolyisocyanats mit einem Isocyanatgehalt von 21 Gew.-%, einer mittleren Funktionalität von 3,6 und einem mittleren Molekulargewicht von 700, das durch Biuretisierungsreaktion aus Hexamethylendiisocyanat hergestellt wurde (Desmodur N^{®} der Bayer AG) unter Rühren zugegeben und gut verteilt. Zu der nun trüben Lösung werden 105 Teile Dibutyl-zinn-dilaurat zugegeben und die Mischung 3 Minuten intensiv vermischt. Die weißliche trübe Lösung wird in eine vorbereitete, quadratische Umhüllung aus Polyurethanfolie der Folienstärke 0,2 mm mit einer Kantenlänge von 45 cm gegossen und die Folienhülle luftdicht verschweißt. Das so vorgefertigte Gel-Polster wird auf eine ebene Unterlage gelegt und zur Gelreaktion sich selbst überlassen, wodurch das Gel-Polster seine mechanische Endfestigkeit erreicht und vollbelastet werden kann. Es ist ein weicher, formbeständiger, unter Druck deformierbarer Körper. Wird die deformierende Kraft aufgehoben, geht das Gel-Polster in seinen Ausgangszustand zurück.

Bei einer Belastung mit einem künstlichen, aus Kunststoff geformten und mit 35 kg belasteten Gesäß wird am Kreuzbein ein Druck von 44 Druckeinheiten (DE) und an den Sitzbeinvorsprüngen ein Druck von 48 DE gemessen.

### Beispiel 2 (Vergleichsbeispiel aus der EP-A 57 838)

Ein Schaumstoffpolster aus einem handelsüblichen Polyetherschaumstoff mit einem Raumgewicht nach DIN 53 420 von 35 kg/m³ und einer Stauchhärte (40 %) nach DIN 53 571 von 3,3 KPa, wie er üblicherweise für die Herstellung von Polsterelementen und Matratzen verwendet wird, wird mit einer Folienumhüllung aus Polyurethanfolie, wie sie in Beispiel 1 verwendet wird, versehen. Das so umhüllte Polster wird analog Beispiel 1 mit einem künstlichen Gesäß belastet. Dabei wird am Kreuzbein ein Druck von 109 DE und an den Sitzbeinvorsprüngen ein Druck von 34 DE gemessen.

### Beispiel 3 (aus der EP-A 57 838)

Nach der in Beispiel 1 beschriebenen Arbeitsweise wird eine gelbildende Mischung hergestellt und analog Beispiel 1 in eine quadratische Umhüllung aus elastischer Folie gegossen. Die Umhüllung wird jedoch anstatt aus Polyurethanfolie aus einer 0,2 mm starken Folie aus einem Polymerblend aus 50 Teilen Polypropylen und 50 Teilen eines Styrol-Butadien-Blockcopolymers gefertigt.

Nachdem die Gelreaktion abgeschlossen ist, wird ein weiches, formbeständiges, unter Druck deformierbares Gel-Polster erhalten, das nach Deformation in seinen Ausgangszustand zurückkehrt, wenn die deformierende Kraft aufgehoben wird.

Das auf diese Weise erhaltene Gelb-Polster wird analog Beispiel 1 mit einem künstlichen Gesäß belastet. Dabei wird am Kreuzbein ein Druck von 18 DE und an den Sitzbeinvorsprüngen ein Druck von 19 DE gemessen.

### Beispiel 4 (aus der EP-A 57 838)

Nach der in Beispiel 1 beschriebenen Arbeitsweise wird eine gelbildende Mischung hergestellt und analog Beispiel 1 in eine quadratische Umhüllung gegossen. Die Umhüllung wird anstatt aus Polyurethanfolie aus einem mit einer elastischen Polyurethanbeschichtung versehenen elastischen Textil, wie es beispielsweise zur Herstellung von Miederwaren oder Badebekleidung allgemein üblich und bekannt ist, gefertigt.

Nachdem die Gelreaktion abgeschlossen ist, wird ein weiches, formbeständiges, unter Druck deformierbares Gel-Polster erhalten, das nach Deformation in seinen Ausgangszustand zurückkehrt, wenn die deformierende Kraft aufgehoben wird. Das auf diese Weise erhaltene Gel-Polster wird analog Bespiel 1 mit einem künstlichen Gesäß belastet. Dabei wird an dem Kreuzbeinvorsprung ein Druck von 32 DE und an den Sitzbeinvorsprüngen ein Druck von 28 DE gemessen.

### Beispiel 5 (aus der EP-A 57 838)

3500 Teile eines Polyethers auf der Basis von Trimethylolpropan mit einer Hydroxylzahl von 56, hergestellt aus 45 % Propylenoxid und 55 % Ethylenoxid, 700 Teile eines Polyethers auf der Basis von Trimethylolpropan mit einer Hydroxylzahl von 34, hergestellt aus 83 % Propylenoxid und 17 % Ethylenoxid, 2800 Teile eines Polyethers auf der Basis von Propylenglykol mit einer Hydroxylzahl von 56, hergestellt aus 100 % Propylenoxid, und 35 Teile Dibutyl-zinn-dilaurat werden in einem Rührkessel bei 22°C homogen gemischt. Die Mischung wird mittels einer Zahnradpumpe einem statischen Mischer zugeführt. Aus einem getrennten Vorratsbehälter werden diesem Mischer mittels einer weiteren Zahnradpumpe gleichzeitig 273 Teile des Biuretpolyisocyanats aus Beispiel 1 so zugeführt, dass zu jeder Zeit das Mischungsverhältnis der beiden Komponenten gleich ist und dem Verhältnis der Gesamtmengen entspricht.

Die aus dem statischen Mischer ausfließende weißliche trübe Lösung wird in eine quadratische Umhüllung, wie sie in Beispiel 4 beschrieben wurde, gegossen und daraus, wie in Beispiel 1 beschrieben, ein Gel-Polster in Form eines Kissens hergestellt.

Nachdem die Gelreaktion abgeschlossen ist, wird ein weiches, formbeständiges, unter Druck deformierbares Gel-Polster erhalten, das nach Deformation in seinen Ausgangszustand zurückkehrt, wenn die deformierende Kraft aufgehoben wird.

Das auf diese weise erhaltene Gel-Polster wird, wie in Beispiel 1 beschrieben, mit einem künstlichen Gesäß belastet. Dabei werden folgende Druckwerte gemessen: Kreuzbeinvorsprung 31 DE; Sitzbeinvorsprünge 23 DE.

### Beispiel 6 (aus der EP-A 57 838)

1000 Teile eines Polyethers auf der Basis von Trimethylolpropan mit einer Hydroxylzahl von 35, hergestellt aus 80 % Propylenoxid und 20 % Ethylenoxid, 50 Teile des Biuretpolyisocyanats aus Beispiel 1 und 15 Teile Dibutyl-zinn-dilaurat werden mit Hilfe eines Laborrührers mit Rührscheibe bei Raumtemperatur innerhalb von 1 Minute intensiv vermischt. Nach 10 Minuten erhält man ein trübes, elastisches, farbstabiles Gel, das sich unter dem Einfluss einer darauf wirkenden Kraft leicht deformieren lässt und nach Aufheben der deformierenden Kraft seinen Ausgangszustand wieder einnimmt.

Das Gel eignet sich vorzüglich zur Herstellung von Gel-Polstern.

### Beispiel 7 (aus der EP-A 57 838)

1000 Teile eines Polyethers auf der Basis von Sorbit mit einer Hydroxylzahl von 46, hergestellt aus 100 % Propylenoxid, 25 teile Toluylendüsocyanat (80 % 2,4- und 20 % 2,6-Isomeres) und 30 Teile Dibutylzinndilaurat werden mit Hilfe eines Laborrührers mit einer Rührscheibe bei Raumtemperatur innerhalb von 1 Minute intensiv vermischt. Man erhält ein weiches, elastisches, formstabiles Gel, das sich unter dem Einfluss einer darauf wirkenden Kraft leicht deformieren lässt und nach Aufheben der deformierenden Kraft seinen Ausgangszustand wieder einnimmt.

Das Gel eignet sich ebenfalls vorzüglich zur Herstellung von Gel-Polstern.

### Beispiel 8 (aus der EP-A 57 838)

1000 Teile eines Polyethers gemäß Beispiel 7, 45 Teile 4,4'-Diisocyanatodiphenylmethan, das durch Urethanisierungsreaktion mit Tripropylenglykol modifiziert wurde und einen Isocyanatgehalt von 23 Gew.-% aufweist und 30 Teile Dibutyl-zinn-dilaurat werden mit Hilfe eines Laborrührers gemäß Beispiel 7 umgesetzt. Man erhält ein weiches, elastisches, formstabiles Gel, das sich unter dem Einfluss einer darauf wirkenden Kraft leicht deformieren lässt und nach Aufheben der deformierenden Kraft seinen Ausgangszustand wieder einnimmt.

Das Gel eignet sich ebenfalls zur Herstellung von Gel-Polstern.

### Beispiel 9 (aus der EP-A 57 838)

1000 Teile eines Polyethers auf der Basis von Glycerin mit einer Hydroxylzahl von 28, hergestellt aus 40 % Propylenoxid und 60 % Ethylenoxid werden mit 50 Teilen des Polyisocyanats gemäß Beispiel 8 und 30 Teilen Dibutyl-zinn-dilaurat analog Beispiel 7 zu einem weichen, elastischen, formstabilen Gel, das sich unter dem Einfluss einer darauf wirkenden Kraft leicht verformen lässt und nach Aufheben der deformierenden Kraft seinen Ausgangszustand wieder einnimmt, umgesetzt. Das Gel ist ebenfalls zur Herstellung von Gel-Polstern geeignet.

### Beispiel 10 (aus der EP-A 57 838)

Das Beispiel zeigt die Mitverwendung von Weichmachungsmitteln. 490 Teile eines Polyethers auf der Basis von Trimethylolpropan mit einer Hydroxylzahl von 56, hergestellt aus 45 % Propylenoxid und 55 % Ethylenoxid, 480 Teile Dibutyladipat, 30 Teile des Isocyanats gemäß Beispiel 1 und 15 Teile Dibutyl-zinn-dilaurat werden gemäß Beispiel 7 zu einem weichen, elastischen, formstabilen Gel umgesetzt, das sich unter dem Einfluss einer darauf wirkenden Kraft leicht deformieren lässt und nach Aufheben der deformierenden Kraft seinen Ausgangszustand wieder einnimmt. Das Gel kann ebenfalls zur Herstellung von Gel-Polstern verwendet werden.

### Anwendungsbeispiele:

### 1. Mehrschicht IMC-Verfahren

Das erfindungsgemäße Deckschichtmaterial (Komponente II) wird durch permanentes Einrühren beispielsweise mittels eines Disolvers oder Flügelrührers (z.B. Druckluftrührer 756D3der Fa. Otto Bock Helthcare) hergestellt. Es ist darauf zu achten, dass alle Additve zur Gestaltung der Oberflächenqualität, wie z.B. Mattierungsmittel, Rheologieverbesserer, Ritz- und Kratzbeständigkeitsverbesserer, Gleitmittel, Farbpigmente u. a. m. wie in der Lacktechnik bekannten Materialien unter Vermeidung von Agglomeraten homogen eingearbeitet werden. Damit eine transparente bzw. transluzente Deckschicht erzeugt werden kann, muß vor Verarbeitung der Komponente II sichergestellt werden, dass keinerlei Luftblasen mehr in der Komponente II enthalten sind. Damit sich die erfindungsgemäße Komponente II später wieder leicht aus den Werkzeugen entformen läßt, werden die Werkzeugoberflächen mit in der PUR-Technik bekannten Trennmitteln eingesprüht.

Beim Eintrag in die vorgewärmte Werkzeugform wird die Komponente II mittels handelsüblichen Lackierpistolen (z. B. Beschichtungs-Set 746B20, Fa. Otto Bock Helthcare, Duderstadt) eingebracht. Es ist darauf zu achten, dass Materialanhäufungen vermieden werden, da diese das Erscheinungsbild und Haptik der Oberfläche beeinflussen. Der Spritz- und Materialdruck des Spritzgerätes ist so einzustellen, dass die gewünschte Deckschichtdicke und die gewünschte Oberflächenbeschaffenheit erzeugt wird.

Die Komponente II muß so lange ablüften, bis keine Lösungsmittel mehr feststellbar sind (Finger- und Riechprobe). Das Ablüften bzw. Trocknen der Komponente II kann durch Wärmezuführung beschleunigt werden.

Beim IMC-Verfahren sind nachfolgende Aufbauten denkbar:
a) beide Werkzeughälften werden mehrlagig mit der Komponente II, ggf. unter Zur Hilfenahme von Abdeckschablonen lackiert. Das Werkzeug wird nach dem Abtrocknen der Komponente II manuell, halb- bzw. vollautomatisch mit handelsüblichen Schließeinheiten geschlossen und verriegelt. Die Komponente I wird mittels für die PUR-Technik üblichen Niederdruckmaschinen in das geschlossene Werkzeug eingebracht. Damit keine Luftblasen im Formteil entstehen, müssen die Steiger und der Anguß der jeweiligen Geometrie angepaßt werden. Nach dem die Komponete II ausreagiert ist, wird das Werkzeug geöffnet und das Formteil entnommen. Damit die Endfestigkeit der Komponente I und II erreicht wird, muß das Formteil noch weitere 72h bei Umgebungstemperatur oder entsprechend kürzere Zeit in einem Warmluftofen bei ca. 40 bis 80°C getempert werden.
b) Die zwei bzw. mehrteiligen Werkzeughälften werden gemäß der Beschreibung unter Punkt 1a lackiert. Auf eine Werkzeughälfte wird beispielsweise ein tragender Einleger, bestehend aus z. B. Holz, Kunststoff, Metall, anderem Materialien sowie deren Kombinationen aus vorgenannten, fixiert. Das Werkzeug wird geschlossen und der Einleger wird mit der Komponente I ummantelt. Die Verbundhaftung zwischen der Komponente I und dem Einleger ist zu prüfen ggf. unter Verwendung von handelsüblichen Primern bzw. Haftvermittlern zu verbessern. Damit die Endfestigkeit der Komponente I und II erreicht wird, muß das Formteil noch weitere 72h bei Umgebungstemperatur oder entsprechend kürzere Zeit in einem Warmluftofen bei ca. 40 bis 80°C getempert werden. Es ensteht nachfolgender Aufbau:
   erfindungsgemäße Deckschicht (Komponente II)
   erfindungsgemäße Gelschicht (Komponente I)
   Formteilträger
   erfindungsgemäße Gelschicht (Komponente I)
   erfindungsgemäße Deckschicht (Komponente II)
c) Als weitere Variante ist denkbar, dass auf eine Werkzeughälfte ein Formteilträger aus den unter 1b) bereits genannten Materialien aufgespannt wird. Die zwei Werkzeughälften werden geschlossen und mit der Komponente I angespritzt. Es entsteht nachfolgender Aufbau:
   erfindungsgemäße Deckschicht (Komponente II)
   erfindungsgemäße Gelschicht (Komponente I)
   Formteilträger

Damit die Endfestigkeit der Komponente I und II erreicht wird, muß das Formteil noch weitere 72h bei Umgebungstemperatur oder entsprechend kürzere Zeit in einem Warmluftofen bei ca. 40 bis 80°C getempert werden.

### 2. Slash-Verfahren

Beim Slash-Verfahren wird die erfingsgemäße lösungsmittelfrei Komponente II in eine Werkzeughälfte eingebracht und anschließend wird das Werkzeug gemäß Punkt 1a geschlossen. Das Werkzeug wird der Geometrie entsprechend geschwenkt, so dass möglichst eine gleichmäßige Deckschichtdicke entsteht. Nachdem die erfindungsgemäße Komponente II ausreagiert ist, was durch Temperatur beschleunigt werden kann, wird die Komponte I mittels handelsüblichen 2 Komponentenmaschinen ins Werkzeug eingespritzt. Auch hier sind entsprechende Steiger zu berücksichtigen. Damit die Endfestigkeit der Komponente I und II erreicht wird, muß das Formteil noch weitere 72h bei Umgebungstemperatur oder entsprechend kürzere Zeit in einem Warmluftofen bei ca. 40 bis 80°C getempert werden.

### 3. Tauch-Verfahren

Beim Tauchverfahren werden im ersten Schritt Konturteile aus der Komponente I mit und ohne Einleger bzw. Formteilträger hergestellt. Nachdem die Komponente I ausreagiert ist, wird das Formteil entnommen. Nachdem es gesäubert wurde, wird das Formteil in ein Tauchbecken, welches mit der Komponente II gefüllt ist, eingetaucht. Die Komponente II muß durch mehr oder weniger Lösungsmittel so eingestellt werden, dass die gewünschte Schichtdicke der Komponente II erreicht wird. Durch Zugabe von speziellen Additiven, wie sie in der allgemeinen Lacktechnik üblich sind, wird das äußere Lackbild beeinflußt. Bei dem Tauchprozess ist darauf zu achten, dass die Komponente II absolut frei von Lufteinschlüssen ist, da diese zu erheblichen Störungen an der Oberfläche führen. Damit die Endfestigkeit der Komponente I und II erreicht wird, muß das Formteil noch weitere 72 h bei Umgebungstemperatur oder entsprechend kürzere Zeit in einem Warmluftofen bei ca. 40 bis 80°C getempert werden.

### 4. Rackel-Verfahren

Die erfindungsgemäße Komponente II wird mittels eines feststehenden bzw. beweglichen Rakels in einem oder mehreren Strichen auf eine Unterlage, wie z.B. glattes und/oder strukturiertes Papier, Folien, Blechen, Metall- und Kunststoffplatten oder anderes aufgerakelt. Die zu berakelnden Oberflächen müssen so prepariert sein, dass nach dem Herstellungsprozess ein leichtes Ablösen der Komponente II möglich ist. Dieses wird beispielsweise durch Trennmittel auf Basis von Silikon bzw. Teflonbeschictung der jeweiligen Oberflächen erreicht. Hier sind auch alle in der PUR-Technik bekannten Oberflächenveredlungen denkbar. Nach einer ausreichenden Ablüftung der Komponente II wird die erfindungsgemäße Komopnente I aufgebracht. Dieses Verfahren ermöglicht eine kontinuierliche Fahrweise. Nach dem die Komponente I eingetragen wurde, kann die verbleibende Oberfläche mit allen nur denkbaren starren und flexiblen Deckschichten kaschiert werden. Als Deckschichten verstehen wir in diesem Zusammenhang beispielsweise Textilien mit und ohne Folienbeschichtung, 3D-Gewirke, Leder, Folien aller Art (siehe das Buch Nentwig Kunststoff Folien, Hanser-Verlag: ISBN 3-446-17598-9: PE, PP, PET, PVC, PUR, PA, u. a. m. und die Kombination daraus) Bleche, Metallplatten, Kunststoffplatten. u. a. m.. Durch die Struktur in der mit der Komponente II zu beschichtenden Oberfläche erhält das Endprodukt eine entsprechende Kopie der Oberflächenstruktur.

### 5. Lackier-Verfahren

Bei diesem Verfahren werden im ersten Schritt die mit der erfindungsgemäßen Komponente II zu beschichteten Formteile aus Komponente I gemäß Punkt 3 hergestellt. Da die Komponente I selbstklebend ist, müssen alle formgebenden Oberflächen mit Trennmitteln bzw. Teflonbeschichtungen, wie sie in der PUR-Technik bekannt sind, benetzt werden. Die mit der Komponente II zu beschichtenden Formteile werden aus den formgebenden Formen entnommen und anschließend mit handelsüblichen Spritzpistolen mit der Komponente II lackiert. Die Komponente II kann mehrschichtig zur Erreichung der gewünschten Schichtdicke aufgebracht werden. Die äußere Deckschicht ist hinsichtlich der gewünschten Oberflächenqualität mit der unter Punkt 1 beispielhaft genannten Additive zu versehen. Damit die Endfestigkeit der Komponente I und II erreicht wird, muß das Formteil noch weitere 72 h bei Umgebungstemperatur oder entsprechend kürzere Zeit in einem Warmluftofen bei ca. 40 bis 80°C getempert werden.

### 6.1 IMC / Gel / PUR-Schaum

Bei diesem Verfahren wird die Komponente II gemäß Punkt 1 und den entsprechenden Unterpunkten in die Werkzeughälften eingespritzt. Nach dem die Komponente II ausreichend abgelüftet ist, wird die Komponente I in die dafür vorgesehnen Aussparrungen eingebracht. Nachdem die Komponente I ausreagiert ist, werden die Werkzeughälften verschlossen und verriegelt. In das geschlossene Werkzeug wird beispielsweise ein Weich-, Halbhart-, Integral-, Hart- oder (RIM) Reaction Injection Moulding-Schaum eingebracht. Hier kann ebenfalls gemäß den Beschreibungen unter Punkt 1a und 1b mit und ohne Einlegern bzw. Formteilträgern gearbeitet werden. Nach Aushärten der Komponenten wird das Formteil entnommen und gemäß obigem Verfahren getempert.

### 6.2 IMC / PUR-Schaum

Bei diesem Verfahren wird gemäß Punkt 6.1 verfahren; lediglich die Komonente I bleibt unberücksichtigt.

### 7.0 IMC/PUR-Schaum lackiert

Bei diesem Verfahren werden handelsübliche Schnitt- und Formschäume, wie z.B. Verbund-, Kalt-, Integral-, Press-, PVC-, viskoelastische Schäume u.a.m. mit der erfindungsgemäßen Komponente II nachträglich mittels einer Spritzpistole lackiert. Die Oberfläche ist durch Variation der Parameter (Material- und Spritzdruck) an der Spritzpistole veränderbar, so dass z.B. eine geschlossene oder offene strapazierfähige Haut auf den jeweiligen Schaum aufgebracht wird.

### Mehrschichtige Beschichtungssysteme aus einer dickschichtigen, gelartigen Grundschicht und einer Deckschicht aus Polyurethan-Lack, deren Herstellung und Verwendung

### Verfahren

1a, 1b, 1c) IMC in Werkzeugen mit anschließender Gel-Injektion
2) Slash-Verfahren
3) Tauchverfahren
4) IMC auf Folie und silikonisiertem Papier mit und ohne Struktur mit nachfolgendem Gelauftrag
5) Lackauftrag nachträglich auf Gelplatten und Konturen

### Anwendungsbeispiele :

- Armlehne für Bürostuhl mit integriertem Nylonträger 1b, 3, 5
- Armlehne fr Bürostuhl auf Basis Formträger 1c, 3, 5
- Sitzelemente für Bürostühle 1a
- Fahrradgriffe 1b, 3, 5
- Mousepads 1a, 5
- Nackenkissen für Waschtische 1a, 2, 3, 5
- Nackenkissen für Badewannen 1a, 2, 3, 5
- Lordosekissen 1a, 2, 3, 5
- Plattenmaterialien 4
- Inliner für Prothesenschäfte 1a, 2, 5
- Konturteile, Ferse, Ballen für Fußbettungen in Schuhen 1a
- Fahrradsattel 1c
- Lenkräder 1b, 6.1, 6.2

### Lackzusammenstellung

**· Lackrohstoff**
**· Gemisch aus mehreren Lösungsmitteln**
· **Isocyanat**
· **Aktivator**
· **Additive zur Gestaltung der Oberfläche**
   - Reologie
   - Ritz- und Kratzfestigkeit
   - Gleitfähigkeit- Verhindern des Ablaufens
   - Farbadditive
   - Lösungsmittelbeständigkeit
· **Spritzwerkzeug**
   - Spritzpistole mit separater Materialdruckerzeugung einstellbar
   - Materialdruck 0-3 - 1,5 bar
   - Spritzdruck 1,5 - 8 bar
· **Druckluft**
   - trocken und ölfrei
   - regelbar 1 - 8 bar
· **Formen**
   - Aluminium mit und ohne Struktur
   - teflonisiert, geätzt, erodiert
· **Gießharz**
· **PE-Folien**
· **strukturiertes Papier, silikonisiert**

### Arbeitsablauf

- Erwärmen der Form auf ca. 40 - 70 °C
- Säubern der Form mittels Druckluft
- Einbringen des Trennmittels mit Druckluftzerstäuber
- Auftragen des Lackes (2 - 8 Arbeitsgänge, kreuzweise mit Druckluftpistole)
- Abtrocknen mit Luftdusche oder Wärmegebläse
- Einlegen und Befestigen des Einlegers oder Trägers
- Schließen der Form
- Injektion des Gels
- Entnahme des kompletten Formteiles
- Temperieren des Formteiles 72 h bei Umgebungstemperatur oder mehrstündig bei 30 - 80 °C im Heißluftofen

## Patentansprüche

1. Beschichtungssysteme aus
I) wasserfreien, gelartigen, hochmolekularen, gegebenenfalls wirkstoffhaltigen Polyurethanmassen bestehend aus
(1) 15-62 Gew.-%, bezogen auf die Summe aus (1) und (2), einer hochmolekularen kovalent vernetzten Polyurethanmatrix und
(2) 38-85 Gew.-%, bezogen auf die Summe aus (1) und (2), eines in der Matrix durch Nebenvalenzkräfte fest gebundenen flüssigen Dispersionsmittels aus einer oder mehreren Polyhydroxylverbindungen mit einem Molekulargewicht zwischen 1000 und 12 000 und einer OH-Zahl zwischen 20 und 112 besteht, wobei das Dispersionsmittel im wesentlichen keine Hydroxylverbindungen mit einem Molekulargewicht unter 800 enthält, sowie gegebenenfalls
(3) 0,1-100 Gew.-%, bezogen auf die Summe aus (1) und (2), an Füll- und/oder Zusatzstoffen, sowie gegebenenfalls Katalysatoren für die polyurethanbildende Reaktion, wobei gegebenenfalls 0,1 bis 50 Gew.-% der Additive Wirkstoffe sein können,
und
II) lösemittelhaltigen, lösemittelfreien und/oder wässrigen Polyurethandecklacken auf Basis von
a) 0-50 Gew.-%, bezogen auf den gesamten Decklack, an Polyurethanaddukten,
b) 0-90 Gew.-%, bezogen auf den gesamten Decklack, an flexiblen Polyolen mit einer Tg von -100 bis 25°C und einem OH-Gehalt von 0 bis 25 Gew.-%,
c) 1,7 - 60 Gew.-%, bezogen auf den gesamten Decklack, Polyisocyanaten mit einem NCO-Gehalt von 4 bis 50 Gew.-%.

2. Beschichtungssysteme nach Anspruch 1, **dadurch gekennzeichnet, dass** die Polyurethanmasse (I) 20-57 Gew.-% der hochmolekularen Polyurethanmatrix (1) und 43 - 80 Gew.-% des flüssigen Dispersionsmittels (2) enthält, und dass die hochmolekulare Polyurethanmatrix ein Umsetzungsprodukt aus einem oder mehreren Polyisocyanaten und einer oder mehreren Polyhydroxylverbindungen mit einem Molekulargewicht zwischen 1000 und 12 000 und einer OH-Zahl zwischen 20 und 112 ist, wobei das Produkt aus NCO-Funktionalität der Polyisocyanate und OH-Funktionalität der Polyhydroxylverbindungen mindestens 5,2 beträgt.

3. Beschichtungssysteme nach Anspruch 1, **dadurch gekennzeichnet, dass** das flüssige Dispersionsmittel (2) eine oder mehrere Polyhydroxylverbindungen mit einem Molekulargewicht von 1700 - 6000 und einer OH-Zahl von 28 - 84 ist.

4. Beschichtungssysteme nach Anspruch 1, **dadurch gekennzeichnet, dass** in der Komponente (3) Wirkstoffe aus der Gruppe der Biozide, Duftstoffe, Farben, Detergentien und Waschhilfsmittel, Stempel- und Druckfarben, Alterungsschutzmittel, Gleitmittel und Antistatika, Reinigungs- und Pflegemittel, Antifoulingmittel und Holzschutzmittel, Pflanzennährstoffe, Frischhaltemittel und Wachstumsregulatoren enthalten sind.

5. Beschichtungssysteme nach Anspruch 1, **dadurch gekennzeichnet, dass** sie Polyisocyanate (c) in Anteilen bis zu 40 % Gew.-%, bezogen auf den gesamten Decklack, enthalten.

6. Beschichtungssysteme nach Anspruch 1, **dadurch gekennzeichnet, dass** der Polyurethan-Decklack (II) auf Basis flexibler Polyole mit einer Tg von -100 bis 25°C und mit einem OH-Gehalt von 0-25 Gew.-%, mit Polyisocyanaten (c) vernetzt ist und gegebenenfalls bis zu 50 Gew.-%, bezogen auf das Gesamtgewicht des Decklacks, nichtvernetzende Polyurethanaddukte enthält.

7. Beschichtungssysteme nach Anspruch 1, **dadurch gekennzeichnet, dass** die Polyole II(b) mit Polyacrylaten abgemischt sind.

8. Mehrschichtige Beschichtung auf Substraten hergestellt aus Beschichtungssystemen nach Anspruch 1 mit einer Schichtdicke der Polyurethanmatrix von 30 µm bis 10 mm und einer Deckschicht aus PU-Lack mit einer Schichtdicke von 5 µm bis 2 mm.

9. Verfahren zur Herstellung der mehrschichtigen Beschichtung entsprechend Anspruch 8 durch
a) Eintrag der gelartigen hochmolekularen Polyurethanmatrix in eine Werkzeugform mittels Rakeln, Gießen, Sprühen, Injizieren,
b) Aufbringen der Deckschicht mittels Rakeln, Gießen, Sprühen, Injizieren,
wobei a und b hinsichtlich ihrer Abfolge insoweit variabel sind als dass in das Werkzeug
(i) zuerst die Decklackschicht auf die Werkzeugwand und dann die gelartige hochmolekulare Polyurethanmatrix eingebracht wird oder
(ii) zuerst die hochmolekulare Polyurethanmatrix eingebracht wird und dann der Decklack auf die hochmolekulare Polyurethanmatrix appliziert wird und im geschlossenen oder geöffneten Werkzeug ausreagiert wird oder
(iii) zuerst die hochmolekulare Polyurethanmatrix eingebracht wird und dann der Decklack auf die Werkzeugwand appliziert wird und im geschlossenen Werkzeug ausreagiert wird.

10. Verfahren gemäß Anspruch 9, **dadurch gekennzeichnet, dass** das zu beschichtende Trägermaterial in das Werkzeug durch Injektion (z.B. Kunststoffe, Duroplaste), Einlegen (z.B. Metall, Textil, Holz, fertige Bauteile) eingebracht und durch Rakeln, Gießen, Sprühen (z.B. Folien, PU-Lack, Sprühhäute) mit dem Decklack unter den zu a und b beschriebenen Variationen beschichtet wird.

11. Verwendung der Beschichtungssysteme gemäß Anspruch 1 zur Beschichtung von Substraten.

12. Substrate, **dadurch gekennzeichnet, dass** sie mit Beschichtungssystemen gemäß Anspruch 1 beschichtet sind.

## Claims

1. Coating systems of
(I) anhydrous, gel-like, high-molecular weight polyurethane compositions optionally containing active substances, comprising
(1) 15-62 wt.%, referred to the sum of (1) and (2), of a high-molecular weight, covalently crosslinked polyurethane matrix and
(2) 38-85 wt.%, referred to the sum of (1) and (2), of a liquid dispersing agent firmly bonded in the matrix by secondary valency forces, comprising one or more polyhydroxyl compounds with a molecular weight between 1000 and 12000 and an OH number between 20 and 112, wherein the dispersing agent contains substantially no hydroxyl compounds with a molecular weight below 800, as well as optionally
(3) 0.1-100 wt.%, referred to the sum of (1) and (2), of fillers and/or additives, as well as optionally catalysts for the polyurethane-forming reaction, wherein optionally 0.1 to 50 wt.% of the additives may be active substances,
and
II) solvent-containing, solvent-free and/or aqueous polyurethane coating lacquers based on
a) 0-50 wt.%, referred to the total coating lacquer, of polyurethane adducts,
b) 0-90 wt.%, referred to the total coating lacquer, of flexible polyols with a Tg of -100° to 25°C and an OH content of 0 to 25 wt.%,
c) 1.7-60 wt.%, referred to the total coating lacquer, of polyisocyanates with an NCO content of 4 to 50 wt.%.

2. Coating systems according to claim 1, **characterised in that** the polyurethane composition (I) contains 20-57 wt.% of the high-molecular weight polyurethane matrix (1) and 43-80 wt.% of the liquid dispersing agent (2), and that the high molecular weight polyurethane matrix is a reaction product of one or more polyisocyanates and one or more polyhydroxyl compounds with a molecular weight between 1000 and 12000 and an OH number between 20 and 112, wherein the arithmetic product of NCO functionality of the polyisocyanates and OH functionality of the polyhydroxyl compounds is at least 5.2.

3. Coating systems according to claim 1, **characterised in that** the liquid dispersing agent (2) is one or more polyhydroxyl compounds with a molecular weight of 1700 - 6000 and an OH number of 28 - 84.

4. Coating systems according to claim 1, **characterised in that** the component (3) contains active substances from the group comprising biocides, fragrances, colourants, detergents and washing aids, marking inks and printing inks, anti-ageing agents, lubricants and antistatics, cleaning and care agents, anti-fouling agents and wood protection agents, plant nutrients, preservatives and growth regulators.

5. Coating systems according to claim 1, **characterised in that** they contain polyisocyanates (c) in proportions of up to 40 wt.% referred to the total coating lacquer.

6. Coating systems according to claim 1, **characterised in that** the polyurethane coating lacquer (II) based on flexible polyols with a Tg of -100° to 25°C and with an OH content of 0-25 wt.%, is crosslinked with polyisocyanates (c) and optionally contains up to 50 wt.%, referred to the total weight of the coating lacquer, of non-crosslinking polyurethane adducts.

7. Coating systems according to claim 1, **characterised in that** the polyols II(b) are mixed with polyacrylates.

8. Multi-layer coating of substrates produced from coating systems according to claim 1 with a layer thickness of the polyurethane matrix of 30 µm - 10 mm and a cover layer of polyurethane lacquer with a layer thickness of 5 µm - 2 mm.

9. Process for producing the multi-layer coating according to claim 8, by
a) addition of the gel-like, high-molecular weight polyurethane matrix to a mould by means of knife coating, pouring, spraying, injecting,
b) application of the cover layer by means of knife coating, pouring, spraying, injecting,
wherein a) and b) may be varied as regards their order of addition to the mould, in that
(i) first of all the coating lacquer layer is applied to the mould wall and the gel-like, high-molecular weight polyurethane matrix is then introduced, or
(ii) first of all the high-molecular weight polyurethane matrix is introduced and the coating lacquer is then applied to the high molecular weight polyurethane matrix and the components are reacted in a closed or open mould, or
(iii) first of all the high-molecular weight polyurethane matrix is introduced and the coating layer is then applied to the mould wall, and the components are reacted in the closed mould.

10. Process according to claim 9, **characterised in that** the carrier material to be coated is introduced into the mould by injection (e.g. plastics, thermosetting plastics), insertion in situ (e.g. metal, textiles, wood, finished structural parts), and is coated with the coating lacquer under the variants described in a) and b), by knife coating, pouring, spraying (e.g. films, polyurethane lacquer, spray skins).

11. Use of the coating systems according to claim 1 for the coating of substrates.

12. Substrates, **characterised in that** they are coated with coating systems according to claim 1.

## Revendications

1. Systèmes de revêtement consistant en
I) des masses de polyuréthanes macromoléculaires anhydres, gélifiées, contenant le cas échéant des substances actives, et qui consistent elles-mêmes en
(1) 15 à 62 % en poids, sur le total de (1) et (2), d'une gangue de polyuréthane macromoléculaire réticulée par covalence et
(2) 38 à 85 % en poids, sur le total de (1) et (2), d'un agent dispersant liquide solidement fixé dans la gangue par des forces de valence secondaire, cet agent dispersant consistant lui-même en un ou plusieurs composés polyhydroxylés à un poids moléculaire de 1 000 à 12 000 et un indice d'OH de 20 à 112, cet agent dispersant ne contenant essentiellement aucun composé hydroxylé à un poids moléculaire inférieur à 800, et le cas échéant,
(3) 0,1 à 100 % en poids, sur le total de (1) et (2), de matières de charges et/ou additifs, et le cas échéant de catalyseurs de la réaction de formation des polyuréthanes, 0,1 à 50 % en poids des additifs pouvant consister le cas échéant en substances actives,
et
II) des vernis de polyuréthanes de couverture contenant des solvants, sans solvants et/ou aqueux, à base de
a) 0 à 50 % du poids total du vernis de couverture, d'adducts de polyuréthanes,
b) 0 à 90 % du poids du vernis de couverture total, de polyols flexibles ayant une température de transition du second ordre de -100 à +25°C et une teneur en groupes OH de 0 à 25 % en poids,
c) 1,7 à 60 % du poids total du vernis de couverture, de polyisocyanates à une teneur en groupes NCO de 4 à 50 % en poids.

2. Systèmes de revêtement selon la revendication 1, **caractérisés en ce que** la masse de polyuréthanes I contient 20 à 57 % en poids de la gangue macromoléculaire de polyuréthane 1 et 43 à 80 % en poids de l'agent dispersant liquide 2 et **en ce que** la gangue macromoléculaire de polyuréthanes est un produit de réaction d'un ou plusieurs polyisocyanates et d'un ou plusieurs composés polyhydroxylés à un poids moléculaire de 1 000 à 12 000 et un indice d'OH de 20 à 112, le produit de la fonctionnalité en groupes NCO des polyisocyanates et de la fonctionnalité en groupes OH des composés polyhydroxylés étant d'au moins 5,2.

3. Systèmes de revêtement selon la revendication 1, **caractérisés en ce que** l'agent dispersant liquide 2 consiste en un ou plusieurs composés polyhydroxylés à un poids moléculaire de 1 700 à 6 000 et un indice d'OH de 28 à 84.

4. Systèmes de revêtement selon la revendication 1, **caractérisés en ce que** le composant (3) contient des substances actives du groupe des biocides, des parfums, des colorants, des détergents et produits auxiliaires de lavage, des encres à tampon et des encres d'imprimerie, des agents de protection contre le vieillissement, des agents lubrifiants et des agents antistatiques, des produits de nettoyage et de soins, des agents antisalissures et des produits pour protection du bois, des substances phytonutritives, des conservateurs et des régulateurs de croissance.

5. Systèmes de revêtement selon la revendication 1, **caractérisés en ce qu'**ils contiennent les polyisocyanates (c) en proportion allant jusqu'à 40 % du poids total du vernis de couverture.

6. Systèmes de revêtement selon la revendication 1, **caractérisés en ce que** le vernis de polyuréthanes de couverture (II) est à base de polyols flexibles ayant une température de transition du second ordre allant de -100 à +25°C et une teneur en groupes OH de 0 à 25 % en poids, réticulés par les polyisocyanates (c) et contenant le cas échéant jusqu'à 50 %, sur le poids total du vernis de couverture, d'adducts de polyuréthanes non réticulants.

7. Systèmes de revêtement selon la revendication 1, **caractérisés en ce que** les polyols II(b) sont mélangés avec des polyacrylates.

8. Revêtement multicouche appliqué sur des supports à l'aide des systèmes de revêtement selon la revendication 1, avec une épaisseur de la couche de gangue de polyuréthanes allant de 30 µm à 10 mm et une couche de couverture du vernis de polyutéthanes à une épaisseur de 5 µm à 2 mm.

9. Procédé pour l'application du revêtement multicouche selon la revendication 8 par
a) introduction de la gangue macromoléculaire de polyréthanes gélifiée dans un outil de moulage par raclage, coulée, pulvérisation, injection,
b) application de la couche de couverture par raclage, coulée, pulvérisation, injection,
la séquence des opérations (a) et (b) pouvant varier en ce que, dans l'outil,
(i) on applique d'abord la couche de vernis de couverture sur les parois de l'outil puis on introduit la gangue macromoléculaire de polyuréthanes gélifiée, ou bien
(ii) on introduit d'abord la gangue macromoléculaire de polyuréthanes puis on applique le vernis de couverture sur la gangue macromoléculaire de polyuréthanes et on laisse réagir dans l'outil ouvert ou fermé, ou bien
(iii) on introduit d'abord la gangue macromoléculaire de polyuréthanes puis on applique le vernis de couverture sur les parois de l'outil et on laisse réagir dans l'outil fermé.

10. Procédé selon la revendication 9, **caractérisé en ce que** la matière de support à revêtir est introduite dans l'outil par injection (par exemple pour les résines synthétiques, les résines duroplastiques), par couchage (par exemple pour les métaux, les textiles, le bois, les pièces de construction finies), puis on revêt du vernis de couverture selon les variantes décrites en (a) et (b) par raclage, coulée, pulvérisation (par exemple pour les feuilles, les vernis de polyuréthanes, les pellicules pulvérisées).

11. Utilisation des systèmes de revêtement selon la revendication 1 pour le revêtement de substrats.

12. Substrats **caractérisés en ce qu'**ils ont été revêtus à l'aide de systèmes de revêtement selon la revendication 1.
